# EUROPEAN PATENT APPLICATION

(11) **EP 4 614 220 A1**
(43) Date of publication of application: **10.09.2025**
(21) Application number: 23885759.3
(22) Date of filing: 31.10.2023
(51) Int. Cl.: G02F 1/15, B29C 33/14, B29C 45/14, C09K 3/10, G02B 3/00, G02C 7/00, G02C 7/10, G02C 13/00, G02F 1/1523, G02F 1/153, G02F 1/155, G02F 1/161

(54) **ELECTROCHROMIC SHEET AND ELECTROCHROMIC DEVICE**

(30) Priority: 31.10.2022 JP 2022174657; 31.10.2022 JP 2022174669; 31.10.2022 JP 2022174692; 31.10.2022 JP 2022174841; 04.11.2022 JP 2022177604; 04.11.2022 JP 2022177608
(71) Applicant: Sumitomo Bakelite Co.Ltd., Shinagawa-ku Tokyo 140-0002 (JP)
(72) Inventor: NISHINO, Satoshi, Tokyo 140-0002 (JP); NAKAMURA, Tadashi, Tokyo 140-0002 (JP); MATSUI, Tomoki, Tokyo 140-0002 (JP)
(74) Representative: Müller-Boré & Partner Patentanwälte PartG mbB
(86) International application number: PCT/JP2023/039243
(87) International publication number: WO 2024/096005

(57) **Abstract**

An electrochromic sheet (100) according to the present invention includes a first support layer (1), an electrolyte layer (4) provided on the first support layer (1), a first electrochromic layer (3) provided on at least one surface of the electrolyte layer (4), and a sealing part (8) provided to cover at least a side surface of the electrolyte layer (4), and an amount of deformation measured according to the following procedure i is 0.01 mm to 0.09 mm. Procedure i: A test piece (having a maximum length of 20 mm or more) in which the electrolyte layer (4) is located at a central part and the sealing part (8) is located at an outer edge is produced by using the electrochromic sheet (100), the test piece is chucked at both ends by a chucking part, the central part of the test piece is pressed at 30 N for 30 seconds, and a difference in depth between the central part of the test piece before being pressed and the central part of the test piece after being pressed is defined as an amount of deformation (mm).

## Description

### TECHNICAL FIELD

The present invention relates to an electrochromic sheet and an electrochromic device.

### BACKGROUND ART

The electrochromic element is known as an element that utilizes electrochromism, which is a phenomenon in which an oxidation-reduction reaction occurs reversibly by applying a voltage, and a transmittance changes reversibly. For example, due to the fact that color development can be obtained by applying a positive voltage to the electrochromic element and a transparent state can be obtained by applying a negative voltage to the electrochromic element to cause decoloration, it is possible to carry out color development and decoloration in the electrochromic element at any timing by providing a switch that is capable of carrying out switching between application of a positive voltage and application of a negative voltage.

Such an electrochromic element can have layer configurations that are largely divided into two kinds. One is a layer configuration in which an electrochromic material and an electrolyte material are mixed, and the other is a multilayer configuration in which layers are formed of an electrochromic material and an electrolyte material, respectively. In addition, in the electrochromic element having the latter multilayer configuration, the electrochromic material is immobilized in a layered shape. Therefore, an electric charge injected into the electrochromic material causes a reverse reaction to proceed through an external circuit. As a result, there is an advantage that in a case where the color development is carried out once, the color development state can be maintained until the decoloration driving is carried out, which makes it possible to reduce power consumption.

As an electrochromic device using a gel electrolyte, for example, a device described in Patent Document 1 is known. Patent Document 1 discloses an electrolyte solution having a Tg of less than about -40°C, which contains at least one difunctional redox dye dissolved in an ionic liquid solvent.

### RELATED DOCUMENT

### PATENT DOCUMENT

Patent Document 1: International Publication No. WO2004/001877

### SUMMARY OF THE INVENTION

### TECHNICAL PROBLEM

The inventors of the present invention have found that since such an electrochromic device as disclosed in Patent Document 1 is a device in which an electrolyte layer having a gel-like form is sealed inside, the electrochromic device tends to be depressed in a lamination direction during the processing.

### SOLUTION TO PROBLEM

As a result of intensive studies to improve the processability of the electrochromic sheet, the inventors of the present invention have found that it is effective to use, as an indicator, an amount of deformation in a case of carrying out pressing the electrochromic sheet under a specific condition and to control the amount of deformation, whereby the present invention has been completed.

According to the present invention, the following electrochromic sheet and a technique related thereto are provided.
[1] An electrochromic sheet including:
   a support layer;
   an electrolyte layer provided on the support layer;
   an electrochromic layer provided on at least one surface of the electrolyte layer; and
   a sealing part provided to cover at least a side surface of the electrolyte layer,
   in which an amount of deformation measured according to the following procedure i is 0.01 mm to 0.09 mm,
   Procedure i: a test piece (having a maximum length of 20 mm or more) in which the electrolyte layer is located at a central part and the sealing part is located at an outer edge is produced by using the electrochromic sheet, the test piece is chucked at both ends by a chucking part, the central part of the test piece is pressed at 30 N for 30 seconds, and a difference in depth between the central part of the test piece before being pressed and the central part of the test piece after being pressed is defined as an amount of deformation (mm).
[2] The electrochromic sheet according to [1],
   in which an amount of deformation measured according to the following procedure ii is 0.10 mm or less,
   Procedure ii: a test piece (having a maximum length of 20 mm or more) in which the electrolyte layer is located at a central part and the sealing part is located at an outer edge is produced by using the electrochromic sheet, the test piece is chucked at both ends by a chucking part, the central part of the test piece is pressed at 50 N for 30 seconds, and a difference in depth between the central part of the test piece before being pressed and the central part of the test piece after being pressed is defined as an amount of deformation (mm).
[3] The electrochromic sheet according to [1],
   in which in the procedure i, the electrochromic sheet has no yield point.
[4] The electrochromic sheet according to [2],
   in which in the procedure ii, the electrochromic sheet has no yield point.
[5] The electrochromic sheet according to any one of [1] to [4],
   in which the electrolyte layer is a solid or a gel.
[6] The electrochromic sheet according to any one of [1] to [5],
   in which the electrolyte layer contains a binder resin.
[7] The electrochromic sheet according to [6],
   in which the binder resin includes one or two or more selected from urethane (meth)acrylate, polymethyl (meth)acrylate, polyethyl (meth)acrylate, and poly(ethylene oxide) acrylate.
[8] The electrochromic sheet according to any one of [1] to [7],
   in which the electrochromic layer is provided on each of upper and lower surfaces of the electrolyte layer of the electrochromic sheet.
[9] The electrochromic sheet according to any one of [1] to [8],
   in which the sealing part is formed of a sealing material including a curable resin.
[10] The electrochromic sheet according to [9],
   in which the curable resin has at least one selected from an ultraviolet reactive functional group or a thermal reactive functional group.
[11] The electrochromic sheet according to any one of [1] to [10],
   in which the electrochromic sheet further includes an electrode layer between the support layer and the electrochromic layer.
[12] An electrochromic device that is obtained by using the electrochromic sheet according to any one of [1] to [11].

### ADVANTAGEOUS EFFECTS OF INVENTION

The present invention provides an electrochromic sheet having improved processability.

### BRIEF DESCRIPTION OF THE DRAWINGS

[Fig. 1] A cross-sectional view schematically showing an electrochromic sheet according to a first embodiment.
[Fig. 2] An enlarged cross-sectional view of an electrochromic layer of the electrochromic sheet according to the first embodiment.
[Fig. 3] A cross-sectional view schematically showing an electrochromic sheet according to a second embodiment.
[Fig. 4] A perspective view schematically showing a first support layer that is coated with a sealing material and a conductive paste in a manufacturing process according to the second embodiment.
[Fig. 5] A perspective view showing sunglasses including a lens having a curved sheet in which an electrochromic sheet according to a third embodiment is formed to have a curved shape.
[Fig. 6] A schematic view for describing a manufacturing method for a lens having a curved sheet in which the electrochromic sheet according to the third embodiment is formed to have a curved shape.
[Fig. 7] A plan view showing the electrochromic sheet according to the third embodiment.
[Fig. 8] A longitudinal cross-sectional view taken along a line A-A in a main portion of the electrochromic sheet shown in Fig. 7.
[Fig. 9] A plan view showing a lens having a curved sheet according to the third embodiment.
[Fig. 10] A longitudinal cross-sectional view taken along a line B-B in a main portion of a lens shown in Fig. 8.
[Fig. 11] A longitudinal cross-sectional view showing an electrochromic element that is provided in the electrochromic sheet shown in Fig. 7 and the lens shown in Fig. 9.
[Figs. 12(a) and 12(b)] Views showing an upper mold of a metal mold according to the third embodiment.
[Figs. 13(a) to 13(e)] Views showing a lens according to a fourth embodiment.
[Fig. 14] A view showing a metal mold according to the fourth embodiment.
[Fig. 15] A view showing a view in which a curved concave surface is provided in a lower mold according to the fourth embodiment.
[Fig. 16] A graph showing a displacement-load curve obtained in Example 1-1 and Comparative Example 1-1.
[Fig. 17] A view showing a light transmission spectrum of a support layer in Example 4-1.
[Fig. 18] A view showing a light transmission spectrum of a support layer in Comparative Example 4-1.

### DESCRIPTION OF EMBODIMENTS

Hereinafter, embodiments of the present invention will be described in more detail with reference to the accompanying drawings.

To avoid complications, in a case where there are a plurality of identical constitutional elements in the same drawing, a reference numeral may only be applied to one thereof and reference numerals may not be applied to all. The drawings are for descriptive purposes only. The shape, the dimension ratio, and the like of each member in the drawings do not necessarily correspond to those of a real article.

In the present specification, a denotation "a to b" in the description of a numerical value range represents a or more and b or less unless specified otherwise. For example, "1% to 5% by mass" means "1% by mass or more and 5% by mass or less". In addition, the lower limit value and the upper limit value of the numerical value range can be respectively combined with the lower limit value and the upper limit value of other numerical value ranges.

Each component and material exemplified in the present specification may be used alone or may be used in a combination of two or more kinds thereof, unless otherwise specified.

In the present embodiment, the term "cover" is not limited to a case where covering is continuous, and it is also intended to mean that covering may be partially discontinuous in a portion.

### 1. Electrochromic sheet

### <First embodiment>

### [Electrochromic sheet]

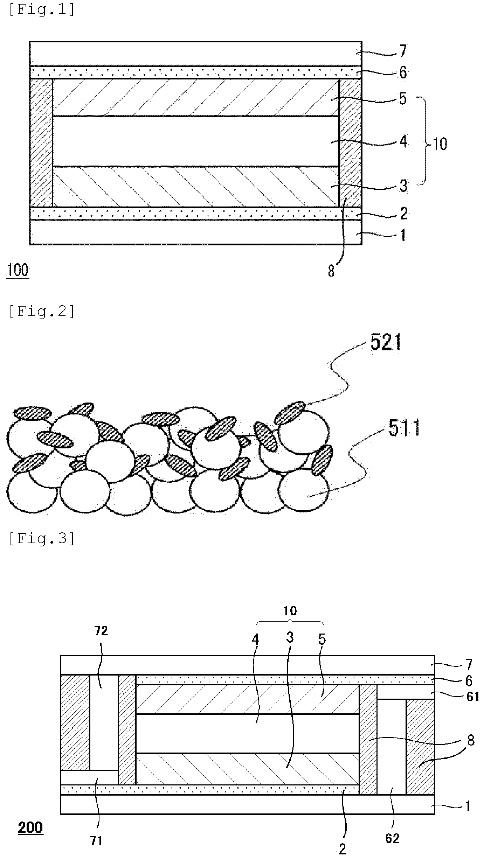

Fig. 1 is a schematic cross-sectional view showing an example of an embodiment of an electrochromic sheet 100.

As shown in Fig. 1, the electrochromic sheet 100 includes a laminate (hereinafter, also referred to as an "electrochromic element 10") in which an electrolyte layer 4, a first electrochromic layer 3, and a second electrochromic layer 5 are laminated in this order, a sealing part 8 that covers a side surface of the electrochromic element 10, and a pair of support layers (a first support layer 1 and a second support layer 7) that sandwich upper and lower surfaces of each of the electrochromic element 10 and a sealing part 8.

In other words, the electrochromic sheet 100 includes the first electrochromic layer 3, the electrolyte layer 4, the second electrochromic layer 5, and the second support layer 7, which are sequentially laminated on the first support layer 1, and the side surfaces of each of the first electrochromic layer 3, the electrolyte layer 4, and the second electrochromic layer 5 are covered with the sealing part 8.

In the present embodiment, the electrochromic sheet 100 further has a primary electrode 2 between the first support layer 1 and the first electrochromic layer 3, and further has a secondary electrode 6 between the second support layer 7 and the second electrochromic layer 5.

In addition, in Fig. 1, a description is made regarding the electrochromic sheet 100 having one electrochromic element 10 partitioned by the sealing part 8; however, the electrochromic sheet may be long, and a plurality of the electrochromic elements 10 partitioned by the sealing part 8 may be provided. In this case, the electrochromic sheet is individualized by being punched out in the thickness direction in correspondence to each electrochromic element 10, which makes it possible to obtain such an electrochromic sheet 100 as shown in Fig. 1. The electrochromic sheet is punched out into a shape close to the lens when seen in a plan view, for example, in a case where an optical lens that uses the electrochromic sheet 100 is processed. The outer edge of the lens is composed of the sealing part 8, and the planar region of the electrochromic element 10 corresponds to the visual field region of the lens.

The electrochromic sheet 100 according to the present embodiment has an amount of deformation of 0.01 mm to 0.09 mm, which is measured according to the following procedure i.

Procedure i: A test piece (having a maximum length of 20 mm or more) in which the electrolyte layer 4 is located at a central part and the sealing part 8 is located at an outer edge is produced by using the electrochromic sheet 100, the test piece is chucked at both ends by a chucking part, the central part of the test piece is pressed at 30 N for 30 seconds, and a difference in depth between the central part of the test piece before being pressed and the central part of the test piece after being pressed is defined as an amount of deformation (mm).

As a result, the processability of the electrochromic sheet 100 can be improved. More specifically, the deformation or recession of the electrolyte layer 4 can be suppressed even in a case where a load is applied to the electrolyte layer 4, for example, a case of punching-out of the electrochromic sheet 100, a case of deformation into a curved shape, a case of surface processing for forming a prescription lens, a case of chucking in lens cutting processing, and the like.

Further, it is preferable that the electrochromic sheet 100 has no yield point in the procedure i. As a result, favorable processability is obtained more stably.

In addition, the electrochromic sheet 100 according to the present embodiment has an amount of deformation of 0.10 mm or less, which is measured according to the following procedure ii.

Procedure ii: A test piece (having a maximum length of 20 mm or more) in which the electrolyte layer 4 is located at a central part and the sealing part 8 is located at an outer edge is produced by using the electrochromic sheet 100, the test piece is chucked at both ends by a chucking part, the central part of the test piece is pressed at 50 N for 30 seconds, and a difference in depth between the central part of the test piece before being pressed and the central part of the test piece after being pressed is defined as an amount of deformation (mm).

Further, it is preferable that the electrochromic sheet 100 has no yield point in the procedure ii. As a result, favorable processability is obtained more stably.

In the procedures i and ii which are described above, the shape of the test piece is appropriately adjusted according to the shape of the electrolyte layer 4 and the sealing part 8 that covers the side surface of the electrolyte layer 4; however, at least the maximum length is 20 mm or more. In a case where the shape of the test piece is quadrangular, it is preferable that one side is 20 mm or more and the other side is 30 mm or more. In addition, the upper limit value of the shape of the test piece is not particularly limited as long as the test piece does not protrude from a stage of a measuring instrument. The central part is a region including a center point of the test piece when seen in a plan view.

The electrochromic sheet 100 satisfying the above-described condition can be realized by devising a material and a production procedure for an electrolyte layer described later. Examples thereof include a kind or content of a binder resin of an electrolyte, use of an ionic liquid described later, and control of a content of the ionic liquid.

In addition, the laminate in which the second support layer 7, the secondary electrode 6, and the second electrochromic layer 5 are laminated in this order is also referred to as a "laminate A".

The electrochromic sheet 100 according to the present embodiment may be configured such that the second electrochromic layer 5 contains a metal nanoparticle 511 and an electrochromic material 521 supported on the metal nanoparticle 511 and satisfies the following condition.

Condition: In a case where an absorbance of the laminate A at a wavelength of 320 nm is denoted by α and an absorbance of the laminate A at a wavelength of 295 nm is denoted by β, (β - α) ≥ 0.8 is satisfied.

In the laminate A according to the present embodiment, there is substantially no difference in absorbance at a wavelength of 320 nm before and after the electrochromic material 521 is supported, and an increase in absorbance is observed at a wavelength of 295 nm. Therefore, in the present embodiment, the amount of the supported electrochromic material 521 is controlled by specifying a difference between an absorbance at a wavelength of 320 nm and an absorbance at a wavelength of 295 nm in the laminate A. As a result, it is presumed that favorable color developability can be stably obtained.

In the present embodiment, the fact that (β - α) is 0.8 or more is intended to mean that the second electrochromic layer 5 according to the present embodiment has a larger amount of the supported electrochromic material than the electrochromic layer in the related art.

(β - α) is preferably 0.9 or more and more preferably 1.0 or more. As a result, the color developability can be further improved. In addition, α is preferably 1 or less and more preferably 0.8 or less.

The electrochromic sheet 100 satisfying the above-described condition can be realized, for example, by adjusting the kind and the particle diameter of the metal nanoparticle 511 or controlling the method of forming the second electrochromic layer 5. Specific examples thereof include controlling the concentration or stirring conditions of the sol solution of the metal nanoparticle 511 as will be described later; and carrying out the temperature management for drying or a surface treatment or the temperature management for the annealing during adsorption of a coloring agent. Examples of the temperature management include setting the drying temperature to be lower than those in the related art, for example, setting to 60 to 110°C; setting the surface treatment temperature to be lower than those in the related art, for example, setting to 80 to 120°C; and setting the annealing temperature during adsorption of a coloring agent to be lower than those in the related art, for example, setting to 60 to 110°C. In addition, the treatment time may be adjusted together with the temperature management. As a result, it is considered that the electrochromic material 521 is easily adsorbed to the metal nanoparticle 511, which makes it possible to satisfy the above-described condition.

It is noted that examples of the method of taking out the laminate A from the electrochromic sheet 100 include a method of cutting and removing a sealing part that covers a side surface of the electrolyte layer of the electrochromic sheet and then carrying out peeling off at the interface between the electrolyte layer and the electrochromic layer.

In addition, in the present embodiment, in the electrochromic sheet 100, both the first support layer 1 and the second support layer 7 may have a light transmittance of 10% or less at a wavelength of 380 nm. Alternatively, only any one of the first support layer 1 or the second support layer 7 may have a light transmittance of 10% or less at a wavelength of 380 nm, and the other thereof may not satisfy this condition. In this case, a sealing material may be subjected to photocuring, for example, by carrying out ultraviolet irradiation from a side of a support layer in which the light transmittance at a wavelength of 380 nm does not satisfy 10% or less.

Hereinafter, each of the configurations will be described.

### [Electrolyte layer]

The electrolyte layer 4 is disposed between the first electrochromic layer 3 and the second electrochromic layer 5 and contains an electrolyte having ion conductivity.

The average thickness of the electrolyte layer 4 is not particularly limited; however, it is preferably set to about 10 µm or more and about 100 µm or less, more preferably set to 20 µm or more and 80 µm or less, and still more preferably set to about 30 µm or more and about 70 µm or less.

The electrolyte to be subjected to filling as the electrolyte layer 4 may be any of a solid or a liquid; however, in addition to a case where the electrolyte is a low-viscosity liquid, for example, it is possible to have various forms such as a gel-like form, a polymer crosslinked form, and a liquid crystal dispersed form. Among the above, the electrolyte layer 4 is preferably formed to have a gel-like form or a solid form. As a result, it is possible to achieve the improvement of the element strength of the electrochromic element 10, the improvement of the reliability thereof, and the like.

The method of forming the electrolyte layer 4 to have a solid state is, for example, preferably a method of holding, in a binder resin, a liquid containing an electrolyte and a solvent. As a result, both the high ion conductivity and the high solid strength of the electrolyte layer 4 can be obtained.

In addition, the binder resin is, for example, preferably a photocurable resin. As a result, the electrolyte layer 4 having a solid state can be obtained at a low temperature and in a short time, as compared with a case where the electrolyte layer 4 having a solid state is obtained by thermal polymerization or vaporization of a solvent.

The electrolyte layer 4 according to the present embodiment preferably contains a binder resin and an electrolyte.

Hereinafter, each material contained in the electrolyte layer 4 will be described in detail.

### (Electrolyte)

The electrolyte is not particularly limited, and a solid electrolyte, an ionic liquid, or the like can be used.

### · Solid electrolyte

The solid electrolyte described above is not particularly limited, and examples thereof include an inorganic ion salt such as an alkali metal salt or an alkaline earth metal salt, a quaternary ammonium salt, acids, and a support salt of alkalis. Specific examples thereof include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂, and one or two or more of these can be used in combination.

### · Ionic liquid

The ionic liquid is a liquid having electrolytic properties. Among the above, an organic ionic liquid is preferably used since it is easy to handle due to having a molecular structure that exhibits a liquid state in a wide temperature range including room temperature.

Examples of the cationic component as a molecular structure of the organic ionic liquid include imidazole derivatives such as an N,N-dimethylimidazolium salt, an N,N-methylethylimidazolium salt, and an N,N-methylpropylimidazolium salt; pyridinium derivatives such as an N,N-dimethylpyridinium salt and an N,N-methylpropylpyridinium salt; and aliphatic quaternary ammonium compounds such as a trimethylpropylammonium salt, a trimethylhexylammonium salt, and a triethylhexylammonium salt. In addition, as the anionic component, a compound containing fluorine is preferably used in consideration of stability in the atmospheric air, and examples thereof include BF₄⁻, CF₃SO₃⁻, PF₄⁻, and (CF₃SO₂)₂N⁻.

Such a material of the electrolyte is preferably an ionic liquid in which a cationic component and an anionic component are randomly combined.

The ionic liquid may be directly dissolved in any of a photopolymerizable monomer, an oligomer, or a liquid crystal material. It is noted that in a case where the solubility in these materials is poor, after obtaining a solution that is obtained by dissolving a small amount of the ionic liquid in a solvent, the ionic liquid may be dissolved by mixing this solution with any of a photopolymerizable monomer, an oligomer, or a liquid crystal material.

Examples of the solvent include propylene carbonate, acetonitrile, γ-butyrolactone, ethylene carbonate, sulfolane, dioxolane, tetrahydrofuran, 2-methyltetrahydrofuran, dimethyl sulfoxide, 1,2-dimethoxyethane, 1,2-ethoxymethoxyethane, polyethylene glycol, alcohols, and a mixed solvent thereof.

Examples of the ionic liquid include ethylmethylimidazolium tetracyanoborate (manufactured by Merck KGaA), ethylmethylimidazolium bistrifluoromethanesulfonimide (manufactured by Kanto Chemical Co., Inc.), ethylmethylimidazolium tripentafluoroethyltrifluorophosphate (manufactured by Merck KGaA), ethylmethylimidazolium bis(fluorosulfonyl)imide (manufactured by Kanto Chemical Co., Inc.), ethylmethylimidazolium diethylphosphate (manufactured by Tokyo Chemical Industry Co., Ltd.), butylmethylimidazolium hexafluorophosphate (manufactured by Tokyo Chemical Industry Co., Ltd.), ethylmethylimidazolium trifluoromethanesulfonate (manufactured by Tokyo Chemical Industry Co., Ltd.), ethylmethylimidazolium acetate (manufactured by Tokyo Chemical Industry Co., Ltd.), ethylmethylimidazolium tricyanomethanide (manufactured by Tokyo Chemical Industry Co., Ltd.), ethylmethylimidazolium dicyanamide (manufactured by Tokyo Chemical Industry Co., Ltd.), methyl octylimidazolium hexafluorophosphate (manufactured by Tokyo Chemical Industry Co., Ltd.), methylpropylpyrrolidinium bisfluorosulfonimide (manufactured by Kanto Chemical Co., Inc.), butylmethylimidazolium tetrafluoroborate (manufactured by Tokyo Chemical Industry Co., Ltd.), butylmethylimidazolium bis(trifluoromethanesulfonyl)imide (manufactured by Tokyo Chemical Industry Co., Ltd.), hexylmethylimidazolium bis(trifluoromethylsulfonyl)imide (manufactured by Kanto Chemical Co., Inc.), and allylbutylimidazolium tetrafluoroborate (manufactured by Kanto Chemical Co., Inc.). One kind of these may be used alone, or two or more kinds thereof may be used in combination. Among these, ethylmethylimidazolium bisfluorosulfonimide, ethylmethylimidazolium tetracyanoborate, ethylmethylimidazolium bistrifluoromethanesulfonimide, ethylmethylimidazolium tripentafluoroethyltrifluorophosphate, or allylbutylimidazolium tetrafluoroborate is preferable, and ethylmethylimidazolium bisfluorosulfonimide is more preferable.

The content of the ionic liquid is preferably 55% by mass or more and more preferably 60% by mass or more with respect to the total amount of the electrolyte composition constituting the gel electrolyte. In a case where the content of the ionic liquid is 55% by mass or more, it is possible to obtain a gel electrolyte having a higher ion conductivity while maintaining favorable processability. On the other hand, the upper limit value of the content of the ionic liquid is not particularly limited; however, it is preferably 98% by mass or less and more preferably 90% by mass or less from the viewpoint of improving the processability.

### (Binder resin)

Examples of the binder resin include one or two or more selected from urethane (meth)acrylate, polymethyl (meth)acrylate, polyethyl (meth)acrylate, and poly(ethylene oxide) acrylate.

Among the above, a polymer having a urethane acrylate chain is preferable in the above-described binder resin. Even in a case of containing a large amount of ionic liquid, the polymer having a urethane acrylate chain is easy to exhibit a high elastic modulus, which makes it possible to obtain an electrolyte that exhibits a low displacement magnitude in a steel ball indentation test.

The content of the polymer having the urethane acrylate chain is preferably 18% by mass to 40%, and more preferably 20% by mass to 30% with respect to the total amount of the electrolyte composition constituting the gel electrolyte.

In a case where the content of the polymer having the urethane acrylate chain is 18% by mass or more, it is possible to obtain a gel electrolyte that can withstand deformation during processing. On the other hand, in a case where the content of the polymer having the urethane acrylate chain is 40% by mass or less, it is possible to improve color developability while maintaining favorable processability.

The molecular weight of the polymer having the urethane acrylate chain is preferably 5,000 to 30,000 and more preferably 8,000 to 20,000. In a case where the molecular weight is set to be equal to or larger than the above-described lower limit value, favorable coating properties are obtained during the formation of the electrolyte sheet. On the other hand, in a case where the molecular weight is set to be equal to or smaller than the above-described upper limit value, compatibility can be improved.

Examples of the commercially available product of the polymer having a urethane acrylate chain include UXF4002 (Nippon Kayaku Co., Ltd.), UXT6100 (Nippon Kayaku Co., Ltd.), UX4101 (Nippon Kayaku Co., Ltd.), UX3204 (Nippon Kayaku Co., Ltd.), UX6101 (Nippon Kayaku Co., Ltd.), UX5000 (Nippon Kayaku Co., Ltd.), UN-350 (Negami Chemical Industrial Co., Ltd.), UN-5590 (Negami Chemical Industrial Co., Ltd.), UN-7700 (Negami Chemical Industrial Co., Ltd.), UN-9200A (Negami Chemical Industrial Co., Ltd.), UN-6303PR (Negami Chemical Industrial Co., Ltd.), UN-1255 (Negami Chemical Industrial Co., Ltd.), UN-6202PR (Negami Chemical Industrial Co., Ltd.), UN-6305 (Negami Chemical Industrial Co., Ltd.), UN-7600 (Negami Chemical Industrial Co., Ltd.), and UN6304 (Negami Chemical Industrial Co., Ltd.).

In addition, a polymer having a polymethyl methacrylate (PMMA) chain is preferable in the binder resin described above. Even in a case of containing a large amount of ionic liquid, the polymer having a PMMA chain is likely to exhibit tackiness, and it is possible to obtain a gel electrolyte that does not deform during the transport in the production step of the electrolyte sheet in the roll-to-roll process.

Examples of the commercially available product of the polymer having a PMMA chain include MB-1 (manufactured by Toagosei Co., Ltd.), MB-1P (manufactured by Toagosei Co., Ltd.), and Hi-pearl M4501 (manufactured by Negami Chemical Industrial Co., Ltd.).

In addition, the binder resin is more preferably a crosslinked substance of a polymer having a polymethyl methacrylate (PMMA) chain. In the crosslinked substance of the polymer having a PMMA chain, a low-molecular-weight PMMA-based monomer having excellent compatibility as compared with a linear PMMA in the stage of the electrolyte composition can be used, and thus the content can be increased, which facilitates the exhibition of tackiness.

Examples of the crosslinked substance of the polymer having PMMA include crosslinked substances obtained by subjecting a reactive oligomer or a reactive polymer having a PMMA chain to a crosslinking reaction.

The reactive oligomer having a PMMA chain is not particularly limited and can be appropriately selected according to the intended purpose. Examples thereof include a macromonomer AA-6 (manufactured by Toagosei Co., Ltd.).

The content of the crosslinked substance of the polymer having a polymethyl methacrylate (PMMA) chain is preferably 1% by mass to 20%, and more preferably 5% by mass to 10% with respect to the total amount of the electrolyte composition constituting the gel electrolyte.

### [Other components]

The other components are not particularly limited and can be appropriately selected according to the intended purpose. Examples thereof include a polymerization initiator.

The polymerization initiator is not particularly limited and can be appropriately selected according to the intended purpose. Examples thereof include a radical polymerization initiator.

Examples of the radical polymerization initiator include a thermal polymerization initiator and a photopolymerization initiator.

Examples of the thermal polymerization initiator include azo compounds such as 2,2'-azobisisobutyronitrile, dimethyl-2,2'-azobisisobutyrate, 2,2'-azobis(2,4-dimethylvaleronitrile), and 2,2'-azobis[2-(2-imidazolin-2-yl)propane]; and organic peroxides such as 2,5-dimethyl-2,5-bis(tert-butylperoxy)hexane and di (4-tert-butylcyclohexyl)peroxydicarbonate. One kind of these may be used alone, or two or more kinds thereof may be used in combination.

Examples of the photopolymerization initiator include ketal-based photopolymerization initiators such as 2,2-dimethoxy-1,2-diphenylethan-1-one; acetophenone-based photopolymerization initiators such as 1-hydroxycyclohexylphenylketone, 2,2-diethoxyacetophenone, 2,2-dimethoxy-2-phenylacetophenone, 4-phenoxydichloroacetophenone, and 4-(t-butyl)dichloroacetophenone; and benzoin ether-based photopolymerization initiators such as benzoin methyl ether, benzoin ethyl ether, benzoin propyl ether, benzoin isopropyl ether, and benzoin isobutyl ether. One kind of these may be used alone, or two or more kinds thereof may be used in combination.

The content of the polymerization initiator is not particularly limited and can be appropriately selected according to the intended purpose; however, it is preferably 0.001 parts by mass or more and 5 parts by mass or less, more preferably 0.01 parts by mass or more and 2 parts by mass or less, and particularly preferably 0.01 parts by mass or more and 1 part by mass or less with respect to 100 parts by mass of all the monomer components.

### [Manufacturing method for gel electrolyte]

In a case where the electrolyte layer 4 has a gel-like form, the electrolyte layer 4 can be produced, for example, as follows.

It can be manufactured by a polymerization reaction using a casting polymerization method or the like in which, first, a composition solution is produced and the produced composition solution is sandwiched by a mold or a film and then polymerized. The composition solution can be obtained by mixing an electrolytic solution obtained by mixing the ionic liquid or the solid electrolyte with a solvent, a polymerizable material, a urethane acrylate monomer, and, as necessary, an acrylate monomer having a PEO chain, and as necessary, an acrylate monomer having a PMMA chain at a desired ratio, and, as necessary, the polymerization initiator and other components.

As another production method, a method of applying a composition solution before polymerization onto one electrochromic layer and subjecting the composition solution to polymerization by ultraviolet irradiation or heating can also be used. In addition, it is also possible to use a method in which the supports on which the electrochromic layer has been formed are allowed to face each other in a state of maintaining a gap of 5 µm or more and 150 µm or less, filling is carried out with a composition solution, and then the composition solution is subjected to polymerization by ultraviolet irradiation or heating.

### [Electrochromic layer]

The first electrochromic layer 3 and the second electrochromic layer 5 are layers containing an electrochromic material, where the first electrochromic layer 3 and the second electrochromic layer 5 are provided on upper and lower surfaces of the electrolyte layer 4, respectively, and are disposed to sandwich the electrolyte layer 4.

Fig. 2 is an enlarged cross-sectional view of the second electrochromic layer 5 of the electrochromic sheet according to the present embodiment. As shown in Fig. 2, the second electrochromic layer 5 contains the metal nanoparticle 511 and the electrochromic material 521. The electrochromic material 521 is supported on the metal nanoparticle 511.

Hereinafter, a case where the second electrochromic layer 5 contains the metal nanoparticle 511 and the electrochromic material 521 will be described; however, although the actions of reduction and oxidation are different from each other, other configurations, effects, and the like are the same even in a case where the first electrochromic layer 3 contains the metal nanoparticle 511 and the electrochromic material 521.

### (Metal nanoparticle)

The metal nanoparticle 511 has excellent conductivity and can make the electrochromic material 521 electrically energized.

The metal nanoparticle 511 may be a metal particle having conductivity, and specific examples thereof include one or two or more selected from tin oxide, titanium oxide, zinc oxide, antimony (V) oxide, zirconium oxide, and yttrium oxide. Among those described above, tin oxide or titanium oxide is preferable.

The average primary particle diameter of the metal nanoparticles 511 (hereinafter, also referred to as a "particle diameter") is preferably 1 nm to 100 nm and more preferably 3 to 8 nm.

In a case where the particle diameter is set to be equal to or larger than the above-described lower limit value, a favorable color development or decoloration performance can be obtained. On the other hand, in a case where the particle diameter is set to be equal to or smaller than the above-described upper limit value, the amount of the supported electrochromic material 521 can be increased by maintaining the transparency of the second electrochromic layer 5 or increasing the specific surface area.

The electrochromic material 521 supported by the metal nanoparticle 511 may be one kind or two or more kinds of compounds.

It is noted that the second electrochromic layer 5 is preferably formed from a sol solution of the metal nanoparticle 511. As a result, a favorable haze value can be obtained, or the reflectivity can be increased.

### (Electrochromic material 521)

The electrochromic material 521 is composed of an electrochromic compound that causes an oxidation-reduction reaction by a voltage, thereby being capable of reversibly carrying out color development and decoloration.

The electrochromic material 521 may be any of an inorganic electrochromic compound or an organic electrochromic compound, and a publicly known electrochromic compound such as a coloring agent-based electrochromic compound, a polymer-based electrochromic compound, a metal complex-based electrochromic compound, or a metal oxide-based electrochromic compound can be used.

The electrochromic material 521 may be any of an inorganic electrochromic compound or an organic electrochromic compound. In addition, a conductive polymer that is known to exhibit electrochromism may be used.

An electrochromic material can be appropriately selected from these electrochromic materials 521 for the first electrochromic layer 3 and the second electrochromic layer 5; however, in a case where one of the first electrochromic layer 3 and the second electrochromic layer 5 uses an electrochromic material 521 having oxidative color developability, the other thereof preferably uses an electrochromic material having reductive color developability.

The electrochromic material 521 having oxidative color developability is preferably a polymerized substance obtained by polymerizing an electrochromic composition that has oxidative color developability and contains a radically polymerizable compound, and it is particularly preferably an electrochromic composition that contains a radically polymerizable compound having a triarylamine.

The length of the single molecule of the electrochromic material 521 is preferably 5 nm or less.

### (First electrochromic layer)

The first electrochromic layer 3 is a layer that contains, as a main material, a material that exhibits coloration by an oxidation reaction, whereby the layer undergoes coloration.

The average thickness of the first electrochromic layer 3 is not particularly limited; however, it is preferably about 0.1 µm or more and about 30 µm or less and more preferably about 0.4 µm or more and about 10 µm or less.

The material that is contained as a main material in the first electrochromic layer 3 and exhibits coloration by an oxidation reaction is not particularly limited, and examples thereof include a polymerized substance obtained by polymerizing a composition containing a radically polymerizable compound having a triarylamine, a bisacridan compound, a Prussian blue-type complex, and nickel oxide. Among these, one kind or two or more kinds can be used in combination.

Examples of the polymerized substance obtained by polymerizing a composition containing a radically polymerizable compound having a triarylamine include those described in Japanese Unexamined Patent Publication No. 2016-45464, Japanese Unexamined Patent Publication No. 2020-138925, and the like.

In addition, examples of the Prussian blue-type complex include a material consisting of Fe(III)₄[Fe(II)(CN)₆]₃.

Among these, in particular, a polymerized substance obtained by polymerizing a composition containing a radically polymerizable compound having a triarylamine is preferably used from the viewpoint that an electrochromic element that is capable of operating at a constant voltage, has excellent repetitive durability, and has high contrast is obtained.

It is noted that the composition containing a radically polymerizable compound having a triarylamine may contain another radically polymerizable compound different from the radically polymerizable compound having a triarylamine, and a polymerized substance obtained by polymerizing such a composition may be composed of a crosslinked substance in which these radically polymerizable compounds are crosslinked.

### (Second electrochromic layer)

The second electrochromic layer 5 is a layer that contains, as a main material, an electrochromic material that exhibits coloration from transparency by a reduction reaction, whereby the layer undergoes coloration.

The average thickness of the second electrochromic layer 5 is not particularly limited; however, it is preferably about 0.2 µm or more and about 5.0 µm or less, and more preferably about 1.0 µm or more and about 4.0 µm or less. In a case where the average thickness is less than 0.2 µm, there is a concern that a color optical density may be hardly obtained depending on the kind of the electrochromic material, and in a case where the average thickness is more than 5.0 µm, the manufacturing cost increases, and there is a concern that the visibility may deteriorate due to coloration depending on the kind of the electrochromic material.

It is preferable that an electrochromic material having the same color tone as the first electrochromic layer 3 is used for the second electrochromic layer 5. This makes it possible to improve the maximum color optical density, and as a result, it is possible to improve the contrast.

In addition, in a case where a material having a different color tone is used in contrast to the above-described case, color mixing can be carried out. In addition, the driving voltage in the electrochromic layer 3, the electrolyte layer 4, and the second electrochromic layer 5 can be effectively reduced by carrying out coloration through the oxidation reaction and the reduction reaction on the sides of both electrodes of the primary electrode 2 and the secondary electrode 6, and thus the improvement of the repetitive durability of the electrochromic sheet 100 can be achieved.

The material that is contained as a main material in the second electrochromic layer 5 and exhibits coloration by a reduction reaction is not particularly limited, and examples thereof include an inorganic electrochromic compound, an organic electrochromic compound, and a conductive polymer. Among these, one kind or two or more kinds can be used in combination.

Examples of the inorganic electrochromic compound include tungsten oxide, molybdenum oxide, iridium oxide, and titanium oxide, and among these, tungsten oxide is preferable. Tungsten oxide is preferably used since tungsten oxide has a low color development or decoloration potential based on the fact that the reduction potential thereof is low, and further, it has excellent durability due to being an inorganic material.

In addition, examples of the organic electrochromic compound include low-molecular-weight organic electrochromic compounds such as an azobenzene-based compound, an anthraquinone-based compound, a diarylethene-based compound, a dihydropyrene-based compound, a dipyridine-based compound, a styryl-based compound, a styryl spiropyran-based compound, a spirooxazine-based compound, a spirothiopyran-based compound, a thioindigo-based compound, a tetrathiafulvalene-based compound, a terephthalic acid-based compound, a triphenylmethane-based compound, a triphenylamine-based compound, a naphthopyran-based compound, a viologen-based compound, a pyrazoline-based compound, a phenazine-based compound, a phenylene diamine-based compound, a phenoxazine-based compound, a phenothiazine-based compound, a phthalocyanine-based compound, a fluoran-based compound, a fulgide-based compound, a benzopyran-based compound, and a metallocene-based compound. Among these, a viologen-based compound or a dipyridine-based compound is preferable. These compounds are preferably used since they have a low color development or decoloration potential and exhibit a favorable color value.

Examples of the viologen-based compound include those described in Japanese Patent No. 3955641, Japanese Unexamined Patent Publication No. 2007-171781, and the like. In addition, examples of the dipyridine-based compound include those described in Japanese Unexamined Patent Publication No. 2007-171781, Japanese Unexamined Patent Publication No. 2008-116718, and the like.

Examples of the conductive polymer include polypyrrole, polythiophene, polyaniline, and a derivative thereof.

### [Support layer]

The first support layer 1 and the second support layer 7 have a function of supporting the primary electrode 2, the first electrochromic layer 3, the electrolyte layer 4, the second electrochromic layer 5, the secondary electrode 6, and the sealing part 8. In addition, it serves as the outermost layer of the electrochromic sheet 100.

In addition, the first support layer 1 and the second support layer 7 constitute the outermost layer of the electrochromic sheet 100. That is, at least the first electrochromic layer 3, the electrolyte layer 4, and the second electrochromic layer 5 are not exposed to the outside. Therefore, the first electrochromic layer 3, the electrolyte layer 4, and the second electrochromic layer 5 can be protected from moisture, oxygen gas, physical impact, friction, and the like from the outside.

In the present embodiment, the first support layer 1 and the second support layer 7 preferably have a light transmittance of 10% or less, more preferably 5% or less, and still more preferably 1% or less at a wavelength of 380 nm. As a result, ultraviolet rays can be effectively reduced, and the light resistance of the electrochromic sheet can be improved.

In addition, in the present embodiment, the first support layer 1 and the second support layer 7 preferably have a maximum value of light transmittance of 10% or less, more preferably 5% or less, and still more preferably 1% or less at a wavelength range of 300 to 380 nm. As a result, ultraviolet rays can be effectively reduced, and the light resistance of the electrochromic sheet can be improved.

In addition, the first support layer 1 and the second support layer 7 preferably have a light transmittance of 80% or more at a wavelength of 430 nm.

The first support layer 1 and the second support layer 7 are not particularly limited as long as they are composed of a resin material having transparency as a main material; however, it is preferable that they contain a transparent resin (base resin) having thermoplasticity as a main material.

The transparent resin is not particularly limited, and examples thereof include resins having transparency, such as an acrylic resin, a polystyrene-based resin, a polyethylene-based resin, a polypropylene-based resin, a polyester-based resin such as polyethylene terephthalate (PET) or polyethylene naphthalate (PEN), a polycarbonate-based resin, a polyamide-based resin, a cycloolefin-based resin, a vinyl chloride-based resin, a polyacetal-based resin, and a silicone resin. Among these, one kind or two or more kinds can be used in combination. Among these, a polycarbonate-based resin or a polyamide-based resin is preferable, and a polycarbonate-based resin is particularly preferable. The polycarbonate-based resin has high transparency (light-transmitting property) and high mechanical strength such as rigidity, and further has high heat resistance. Therefore, the transparency, the impact resistance, and the heat resistance of the first support layer 1 and the second support layer 7 can be improved by using the polycarbonate-based resin for the transparent resin.

As the polycarbonate-based resin, various resins can be used; however, among those described above, an aromatic polycarbonate-based resin is preferable. The aromatic polycarbonate-based resin has an aromatic ring in the main chain thereof, which makes it possible to obtain the first support layer 1 and the second support layer 7 which have more excellent strength.

This aromatic polycarbonate-based resin is synthesized, for example, by an interfacial polycondensation reaction between bisphenol and phosgene, an ester exchange reaction between bisphenol and diphenyl carbonate, or the like.

Examples of the bisphenol include bisphenol A and a bisphenol (modified bisphenol) which is the origin of a repeating unit of a polycarbonate represented by Formula (1A).

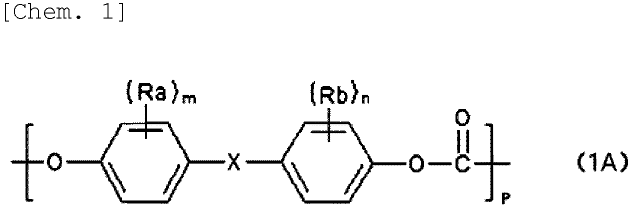

(In Formula (1A), X is an alkyl group having 1 to 18 carbon atoms, an aromatic group, or a cyclic aliphatic group, Ra and Rb are each independently an alkyl group having 1 to 12 carbon atoms, m and n are each an integer of 0 to 4, and p is the number of repeating units.)

It is noted that specific examples of the bisphenol that is the origin of the repeating unit of the polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane, and among these, one kind or two or more kinds can be used in combination.

Among these, as the polycarbonate-based resin, a bisphenol-type polycarbonate-based resin having a skeleton derived from bisphenol is preferably used as a main component. In a case where such a bisphenol-type polycarbonate-based resin is used, the first support layer 1 and the second support layer 7 exhibit more excellent strength.

### · Ultraviolet absorbing agent

It is preferable that the first support layer 1 and the second support layer 7 further contain an ultraviolet absorbing agent. As a result, the light resistance of the electrochromic sheet 100 is easily improved.

In this case, the ultraviolet absorbing agent may be mixed with the resin materials constituting the first support layer 1 and the second support layer 7 to form the first support layer 1 and the second support layer 7 by molding an ultraviolet absorbing agent-containing resin material, or the first support layer 1 and the second support layer 7 may have a multilayer structure in which each of the first support layer 1 and the second support layer 7 has a layer containing an ultraviolet absorbing agent. In a case of adopting a multilayer structure, for example, a polycarbonate may be used as a base material, and an ultraviolet absorbing agent may be applied onto the base material to form a multilayer structure, thereby forming the first support layer 1.

The ultraviolet absorbing agent is not particularly limited, and a publicly known compound can be used; however, examples thereof include a triazine-based compound, a benzophenone-based compound, a benzotriazole-based compound, and a cyanoacrylate-based compound. Among these, one kind or two or more kinds can be used in combination.

Examples of the triazine-based compound include a 2-mono(hydroxyphenyl)-1,3,5-triazine compound, a 2,4-bis(hydroxyphenyl)-1,3,5-triazine compound, and a 2,4,6-tris(hydroxyphenyl)-1,3,5-triazine compound. Specific examples thereof include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4-diphenyl-6-(2-hydroxy-4-butoxyethoxy)-1,3,5-triazine, 2,4-bis(2-hydroxy-4-butoxyphenyl)-6-(2,4-dibutoxyphenyl)-1,3-5-triazine, 2,4,6-tris(2-hydroxy-4-methoxyphenyl)-1,3,5-triazine, 2,4,6-tris(2-hydroxy-4-ethoxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-octyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-3-methyl-4-methoxycarbonylpropylphenyl)-1,3,5-triazine, 2,4,6-tris(2-hydroxy-4-ethoxycarbonylethyloxyphenyl)-1,3,5-triazine, 2,4,6-tris(2-hydroxy-4-(1-(2-ethoxyhexyloxy)-1-oxopropan-2-yloxy)phenyl)-1,3,5-triazine, 2,4,6-tris(2-hydroxy-3-methyl-4-methoxyphenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-octyloxyphenyl)-1,3,5-triazine, 2,4,6-tris(2-hydroxy-3-methyl-4-dodecyloxyphenyl)-1,3,5-triazine, 2,4,6-tris(2-hydroxy-3-methyl-4-benzyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-butoxyethoxyphenyl)-1,3,5-triazine, 2,4,6-tris(2-hydroxy-3-methyl-4-propoxyethoxyphenyl)-1,3,5-triazine, 2,4,6-tris(2-hydroxy-3-methyl-4-methoxycarbonylpropylphenyl)-1,3,5-triazine, 2,4,6-tris(2-hydroxy-3-methyl-4-ethoxycarbonylethyloxyphenyl)-1,3,5-triazine, and 2,4,6-tris(2-hydroxy-3-methyl-4-(1-(2-ethoxyhexyloxy)-1-oxopropan-2-yloxy)phenyl)-1,3,5-triazine.

Examples of the benzotriazole-based compound include 2-(2-hydroxy-5-t-octylphenyl)benzotriazole, 2-(3-t-butyl-2-hydroxy-5-methylphenyl)-5-chloro-2H-benzotriazole, 2-(3,5-di-t-pentyl-2-hydroxyphenyl)-2H-benzotriazole, 2-(2H-benzotriazol-2-yl)-4-methyl-6-(3,4,5,6-tetrahydrophthalimidylmethyl)phenol, 2-(2-hydroxy-4-octyloxyphenyl)-2H-benzotriazole, 2-(2-hydroxy-5-t-octylphenyl)-2H-benzotriazole, 2-[2'-hydroxy-3,5-di(1,1-dimethylbenzyl)phenyl]-2H-benzotriazole, and 2,2'-methylenebis[6-(2H-benzotriazol-2-yl)4-(1,1,3,3-tetramethylbutyl)phenol].

In a case of producing the first support layer 1 and the second support layer 7 by extrusion molding, a triazine-based compound is preferably used from the viewpoint of favorable heat resistance; however, a benzophenone-based compound, a benzotriazole-based compound, and a cyanoacrylate-based compound can also be used without particular limitation as long as the heat resistance with respect to the extrusion temperature is sufficient.

Examples of the commercially available product of the triazine-based ultraviolet absorbing agent include "Tinuvin 1577", "Tinuvin 460", and "Tinuvin 477" (manufactured by BASF Japan Ltd.), and "ADEKA STAB LA-F70" (manufactured by ADEKA Corporation).

In addition, examples of the commercially available product of the benzotriazole-based ultraviolet absorbing agent having high heat resistance include "ADEKA STAB LA-31G" (manufactured by ADEKA Corporation).

The content of the ultraviolet absorbing agent is preferably 0.05 to 8% by mass, more preferably 0.06 to 7% by mass, and still more preferably 0.07 to 6% by mass with respect to the total amount of the first support layer 1. As a result, the above-described effect can be more reliably exhibited. In a case where the content of the ultraviolet absorbing agent is set to be equal to or larger than the above-described lower limit value, an ultraviolet absorbing effect can be sufficiently obtained. On the other hand, in a case where the content of the ultraviolet absorbing agent is set to be equal to or smaller than the above-described upper limit value, it is possible to suppress the aggregation of the ultraviolet absorbing agent.

The content of the ultraviolet absorbing agent is preferably 0.05 to 8% by mass, more preferably 0.06 to 7% by mass, and still more preferably 0.07 to 6% by mass with respect to the total amount of the second support layer 7. As a result, the above-described effect can be more reliably exhibited. In a case where the content of the ultraviolet absorbing agent is set to be equal to or larger than the above-described lower limit value, an ultraviolet absorbing effect can be sufficiently obtained. On the other hand, in a case where the content of the ultraviolet absorbing agent is set to be equal to or smaller than the above-described upper limit value, it is possible to suppress the aggregation of the ultraviolet absorbing agent.

### · Coloring agent

In addition, the first support layer 1 and the second support layer 7 may be such that the first support layer 1 and the second support layer 7 are colorless or the color thereof is red, blue, yellow, or the like as long as the light transmittability is provided.

The selection of these colors can be made by allowing the first support layer 1 and the second support layer 7 to contain a dye or a pigment. Examples of the dye include an acidic dye, a direct dye, a reactive dye, and a basic dye, and one or two or more selected from these dyes can be used in combination.

Specific examples of the dye include C. I. Acid Yellow 17, 23, 42, 44, 79, and 142, C. I. Acid Red 52, 80, 82, 249, 254, and 289, C. I. Acid Blue 9, 45, and 249, C. I. Acid Black 1, 2, 24, and 94, C. I. Food Black 1 and 2, C. I. Direct Yellow 1, 12, 24, 33, 50, 55, 58, 86, 132, 142, 144, and 173, C. I. Direct Red 1, 4, 9, 80, 81, 225, and 227, C. I. Direct Blue 1, 2, 15, 71, 86, 87, 98, 165, 199, and 202, C. I. Direct Black 19, 38, 51, 71, 154, 168, 171, and 195, C. I. Reactive Red 14, 32, 55, 79, and 249, and C. I. Reactive Black 3, 4, and 35.

As necessary, the first support layer 1 and the second support layer 7 may further contain various additives such as an antioxidant, a filler, a plasticizer, a light stabilizer, an ultraviolet absorbing agent, a heat ray absorbing agent, and a flame retardant, in addition to the transparent resin, the dye, or the pigment described above.

In addition, the first support layer 1 and the second support layer 7 may be an extended support layer or may be an unextended support layer.

Further, the refractive index of each of the first support layer 1 and the second support layer 7 at a wavelength of 589 nm is preferably 1.3 or more and 1.8 or less and more preferably 1.4 or more and 1.65 or less. In a case of setting the refractive index n1 of each of the first support layer 1 and the second support layer 7 to be in the above-described numerical value ranges, the color development or decoloration function of the electrochromic sheet 100 is easily recognized visually.

The average thickness of each of the first support layer 1 and the second support layer 7 is preferably set to 0.1 mm or more and 10.0 mm or less, and more preferably set to 0.3 mm or more and 5.0 mm or less.

In a case where the average thicknesses of each of the first support layer 1 and the second support layer 7 are set within such a range as described above, it is possible to precisely suppress or prevent the bending of the electrochromic sheet 100 while achieving thinning of the electrochromic sheet 100.

The first support layer and the second support layer 7 may be formed of the same constituent material or may be formed of constituent materials different from each other. In addition, both of them may be support layers that are extended, or only one of them may be a support layer that is unextended.

The first support layer and the second support layer 7 may have the same refractive index or may have refractive indices different from each other. In addition, the first support layer and the second support layer 7 may have the same thickness or may have thicknesses different from each other.

### [Sealing part]

The sealing part 8 is used in order to integrally cover the side surface of the electrolyte layer 4 and the side surfaces of the first electrochromic layer 3 and the second electrochromic layer 5, in order to prevent the infiltration of moisture or oxygen gas into the electrochromic element 10 from the outside, and in order to allow the electrochromic element 10 to adhere to the first support layer 1 and the second support layer 7 and to prevent the first support layer 1 and the second support layer 7 from being peeled off from the electrochromic element 10. In addition, the sealing part 8 is used to suppress the deterioration of the quality of color development, which occurs during operation in a case where the positions of the first electrochromic layer 3 and the second electrochromic layer 5 deviate from each other, where the first electrochromic layer 3 and the second electrochromic layer 5 are formed between the primary electrode 2 and the secondary electrode 6 to face each other.

The average thickness (the length in the lamination direction) of the sealing part 8 is adjusted according to the average thickness of the electrochromic element 10; however, for example, it is preferably set to about 20 µm or more and about 100 µm or less, and more preferably set to about 40 µm or more and about 80 µm or less.

### (Sealing material)

The sealing part 8 according to the present embodiment is preferably composed of a sealing material having a viscosity (25°C) of 800 Pa·s or more at a shear rate of 0.1/s and having a viscosity (25°C) of 200 Pa·s or less at a shear rate of 10/s. As a result, in the electrochromic element 10, the adhesiveness between the sealing part 8 and the electrolyte layer 4 can be improved. As a result, in a case where the electrochromic sheet 100 according to the present embodiment is processed into a desired shape, the peeling of the sealing part 8 and the electrolyte layer 4 is suppressed even in a case where the sealing part 8 is cut out, and as a result, favorable processing durability is obtained. Among the above, in a case where the electrochromic sheet 100 according to the present embodiment is applied to a use application such as a lens for glasses, it is required that the width of the sealing part 8 positioned at the outer edge of the lens is as small as possible from the viewpoint of enhancing designability. Therefore, higher adhesiveness and higher processability are required. However, since the electrochromic sheet 100 according to the present embodiment uses a sealing material having a predetermined viscosity, higher adhesiveness and higher processability can be obtained.

On the other hand, from the viewpoint of maintaining favorable coating properties of the sealing material in a case of carrying out a step of forming the sealing part **8,** the viscosity at a shear rate of 0.1/s (25°C) is preferably 2,000 Pa·s or less, and the viscosity at a shear rate of 10/s (25°C) is preferably 10 Pa·s or more.

The above-described viscosity (25°C) of the sealing material can be controlled by adjusting the kind of resin and the content of any inorganic particles, which will be described later. In addition, for the manufacturing method, it is suitable to take measures different from those in the related art, such as carrying out kneading while suppressing heat generation.

It is preferable that the measurement conditions are such that the measurement is carried out with a rotational viscometer or a rheometer at a constant temperature and a constant shear rate by using a cone and a plate.

The component constituting the sealing material according to the present embodiment is not particularly limited as long as it is an insulating material having transparency; however, it preferably includes a curable resin and inorganic particles.

### · Curable resin

The curable resin is preferably a curable resin having at least one of an ultraviolet reactive functional group or a thermal reactive functional group, and more preferably a curable resin having a (meth)acryloyl group and/or an epoxy group. Examples of the curable resin include (meth)acrylate and an epoxy resin.

The (meth)acrylate is not particularly limited, and examples thereof include urethane (meth)acrylate having a urethane bond, and epoxy (meth)acrylate derived from a compound having a glycidyl group and (meth)acrylic acid.

The urethane (meth)acrylate is not particularly limited, and examples thereof include derivatives derived from a diisocyanate such as isophorone diisocyanate, and a reactive compound that undergoes an addition reaction with an isocyanate such as acrylic acid or hydroxyethyl acrylate. These derivatives may be chain-elongated with caprolactone, polyol, or the like.

The epoxy (meth)acrylate is not particularly limited, and examples thereof include those obtained by reacting an epoxy compound with (meth)acrylic acid in the presence of a basic catalyst according to a conventional method. Examples thereof include epoxy (meth)acrylate derived from an epoxy resin such as a bisphenol A-type epoxy resin or propylene glycol diglycidyl ether, and (meth)acrylic acid.

Examples of the other (meth)acrylates include one or two or more selected from methyl methacrylate, tetrahydrofurfuryl methacrylate, benzyl methacrylate, isobornyl methacrylate, 2-hydroxyethyl methacrylate, glycidyl methacrylate, (poly)ethylene glycol dimethacrylate, 1,4-butanediol dimethacrylate, 1,6-hexanediol dimethacrylate, trimethylolpropane triacrylate, pentaerythritol triacrylate, glycerin dimethacrylate, and the like.

Examples of the epoxy resin include one or two or more selected from epoxy resins such as a novolac-type epoxy resin such as a phenol novolac-type epoxy resin or a cresol novolac-type epoxy resin, a bisphenol-type epoxy resin such as a bisphenol A-type epoxy resin or a bisphenol F-type epoxy resin, an aromatic glycidylamine-type epoxy resin such as N,N-diglycidylaniline, N,N-diglycidyltoluidine, a diaminodiphenylmethane-type glycidylamine, or an aminophenol-type glycidylamine, a hydroquinone-type epoxy resin, a biphenyl-type epoxy resin, a stilbene-type epoxy resin, a triphenolmethane-type epoxy resin, a triphenolpropane-type epoxy resin, an alkyl-modified triphenolmethane-type epoxy resin, a triazine nucleus-containing epoxy resin, a dicyclopentadiene-modified phenol-type epoxy resin, a naphthol-type epoxy resin, a naphthalene-type epoxy resin, and an aralkyl-type epoxy resin such as a phenol aralkyl-type epoxy resin having a phenylene and/or biphenylene skeleton or a naphthol aralkyl-type epoxy resin having a phenylene and/or biphenylene skeleton, and aliphatic epoxy resins such as an alicyclic epoxy such as vinylcyclohexene dioxide, dicyclopentadiene oxide, or an alicyclic diepoxy adipate, and the like.

In addition, as the curable resin, an epoxy/(meth)acrylic resin having at least one or more (meth)acrylic groups and at least one or more epoxy groups in one molecule may be used.

### · Inorganic particle

Examples of the inorganic particles include one or two or more selected from silica, talc, glass beads, asbestos, gypsum, diatomite, smectite, bentonite, montmorillonite, sericite, activated clay, alumina, zinc oxide, iron oxide, magnesium oxide, tin oxide, titanium oxide, calcium carbonate, magnesium carbonate, magnesium hydroxide, aluminum hydroxide, aluminum nitride, silicon nitride, barium sulfate, calcium silicate, and the like.

The inorganic particle may be an inorganic particle that has been subjected to a hydrophobic treatment on a surface thereof. The inorganic particle can be subjected to a surface treatment according to a publicly known method, for example, by using epoxysilane, aminosilane, (meth)acrylic silane, vinylsilane, methylchlorosilane, dimethylpolysiloxane, or the like. As the inorganic particle, those that have been subjected to a hydrophobic treatment and those that have not been subjected to a hydrophobic treatment may be mixed and used.

The content of the inorganic particles is 1% to 80% by mass, preferably 3% to 70% by mass, and 20% to 60% by mass with respect to the total amount of the sealing material.

### · Others

The sealing material according to the present embodiment may contain organic particles, a polymerization initiator, a thermosetting agent, and the like, in addition to the curable resin and the inorganic particles.

Examples of the organic particle include one or two or more selected from a polyester fine particle, a polyurethane fine particle, a vinyl polymer fine particle, an acrylic polymer fine particle, a silicone fine particle, a core-shell type rubber fine particle, and the like.

Examples of the polymerization initiator include a radical polymerization initiator and a cationic polymerization initiator.

Examples of the radical polymerization initiator include a photoradical polymerization initiator that generates a radical upon irradiation with light, and a thermal radical polymerization initiator that generates a radical upon heating.

Examples of the photoradical polymerization initiator include a benzophenone-based compound, an acetophenone-based compound, an acylphosphine oxide-based compound, a titanocene-based compound, an oxime ester-based compound, a benzoin ether-based compound, and thioxanthone.

Examples of the thermal radical polymerization initiator include those consisting of an azo compound, an organic peroxide, and the like. Among those described above, a polymeric azo initiator consisting of a polymeric azo compound is preferable.

As the cationic polymerization initiator, a photocationic polymerization initiator can be suitably used.

The photocationic polymerization initiator is not particularly limited as long as it generates a protonic acid or a Lewis acid upon irradiation with light. The photocationic polymerization initiator may belong to an ionic photoacid generating type or may belong to a non-ionic photoacid generating type.

Examples of the photocationic polymerization initiator include onium salts such as an aromatic diazonium salt, an aromatic halonium salt, and an aromatic sulfonium salt, and organometallic complexes such as an iron-allene complex, a titanocene complex, and an arylsilanol-aluminum complex.

The content of the polymerization initiator is preferably 0.1 to 30 parts by weight and more preferably 1 to 10 parts by weight with respect to 100 parts by weight of the curable resin.

In a case where the content of the polymerization initiator is equal to or larger than the above-described lower limit value, the sealing material has more excellent curing properties. On the other hand, in a case where the content of the polymerization initiator is equal to or smaller than the above-described upper limit value, the sealing material has more excellent storage stability.

The thermosetting agent is a thermosetting agent for allowing the thermal reactive functional group in the curable resin to undergo a reaction by heating, thereby crosslinking the thermal reactive functional group, and it has a role of improving the adhesiveness and moisture resistance of the curable resin composition after curing.

Examples of the thermosetting agent include an organic acid hydrazide, an imidazole derivative, an amine compound, a polyvalent phenol-based compound, and an acid anhydride. Among those described above, a solid organic acid hydrazide is suitably used.

The content of the above-described thermosetting agent is preferably 0.1 to 50 parts by weight and more preferably 1 to 30 parts by weight with respect to 100 parts by weight of the curable resin.

In a case where the content of the polymerization initiator is equal to or larger than the above-described lower limit value, the sealing material has more excellent curing properties. On the other hand, in a case where the content of the polymerization initiator is equal to or smaller than the above-described upper limit value, the coating property of the sealing material is more excellent.

In addition, additives such as a silane coupling agent, a light shielding agent, a reactive diluent, a spacer, a curing accelerator, an anti-foaming agent, a leveling agent, a polymerization inhibitor, and another coupling agent may be contained as necessary.

### (Manufacturing method for sealing material)

Examples of the method for manufacturing the sealing material according to the present embodiment include a method of mixing, by using a mixer, a curable resin, inorganic particles, and additives such as a polymerization initiator and/or a thermosetting agent and a silane coupling agent, which are added as necessary.

Examples of the mixer include a homogenization disperser, a homogenization mixer, a universal mixer, a planetary mixer, a kneader, a three-roll roller, and a rotation and revolution type mixer.

As a result, a sealing material having the above-described viscosity (25°C) can be obtained.

### [Electrode]

The primary electrode 2 and the secondary electrode 6 are each an electrode that supplies electrons to the gap between the primary electrode 2 and the secondary electrode 6 or receives electrons from the gap between the primary electrode 2 and the secondary electrode 6 in a case where a positive voltage or a negative voltage is applied to the first electrochromic layer 3, the electrolyte layer 4, and the second electrochromic layer 5.

The primary electrode 2 is provided on a surface of the first electrochromic layer 3 opposite to the electrolyte layer 4 side. The secondary electrode 6 is provided on a surface of the second electrochromic layer 5 opposite to the electrolyte layer 4 side.

The constituent materials of the primary electrode 2 and the secondary electrode 6 are not particularly limited as long as they are a conductive material having transparency; however, examples thereof include an oxide such as indium tin oxide (ITO), F-doped tin oxide (FTO), antimony tin oxide (ATO), indium zinc oxide (IZO), In₂O₃, SnO₂, Sb-containing SnO₂, or Al-containing ZnO; and Au, Pt, Ag, Cu, and an alloy containing these. Among these, one kind or two or more kinds can be used in combination.

Examples of the production method for each of the primary electrode 2 and the secondary electrode 6 include a vacuum deposition method, a sputtering method, and an ion plating method. In addition, examples thereof include, as a method in which the material of each of the primary electrode 2 and the secondary electrode 6 can be applied to form the primary electrode 2 and the secondary electrode 6, various printing methods such as a spin coating method, a casting method, a microgravure coating method, a gravure coating method, a bar coating method, a roll coating method, a wire bar coating method, a dip coating method, a slit coating method, a capillary coating method, a spray coating method, a nozzle coating method, a gravure printing method, a screen printing method, a flexo printing method, an offset printing method, a reverse printing method, and an inkjet printing method.

The average thicknesses of the primary electrode 2 and the secondary electrode 6 are adjusted such that an electric resistance value required for the oxidation-reduction reaction in the first electrochromic layer 3 and the second electrochromic layer 5 is obtained, and for example, in a case where ITO is used as a constituent material of the primary electrode 2 and the secondary electrode 6, the average thicknesses thereof are each independently set to preferably about 50 nm or more and about 200 nm or less, and more preferably set to about 100 nm or more and about 150 nm or less.

It is noted that an interlayer, for example, an insulating porous layer or a protective layer may be provided between the respective layers between the primary electrode 2 and the secondary electrode 6.

The total thickness of the electrochromic sheet 100 according to the present embodiment is not particularly limited; however, it is preferably 0.3 mm or more and 10.0 mm or less, and more preferably 0.5 mm or more and 5.0 mm or less.

In a case of setting the total thickness of the electrochromic sheet 100 to be equal to or larger than the above-described lower limit value, it is possible to maintain the strength, while in a case of setting the layer thickness to be equal to or less than the above-described upper limit value, it is possible to improve the processability of the cutting, bending, and the like of the electrochromic sheet 100.

It is noted that each layer provided in the electrochromic sheet 100 may be replaced with a layer having any configuration that makes it possible to exhibit the same function, or another layer may be further provided in the electrochromic sheet 100.

### [Action and effect]

In a case of having a configuration as described above, the electrochromic sheet 100 can cause the electrochromic element 10 to undergo color development to exhibit a predetermined color, for example, by applying a positive voltage between the primary electrode 2 and the secondary electrode 6, and on the other hand, the electrochromic sheet 100 can cause the electrochromic element 10 to be decolored and transparent by applying a negative voltage between the primary electrode 2 and the secondary electrode 6.

### [Manufacturing method for electrochromic sheet]

The manufacturing method for an electrochromic sheet according to the present embodiment is not limited to a case where the number of the electrochromic layer is one, and it can also be applied to a case where there are a plurality of electrochromic layers.

Hereinafter, an example of a manufacturing method for the electrochromic sheet 100 will be described.

The manufacturing method for the electrochromic sheet 100 includes the following steps.

It includes a step of forming the primary electrode 2 on the first support layer 1 and laminating the first electrochromic layer 3 on the primary electrode 2,
a step of forming the secondary electrode 6 on the second support 7 and forming the second electrochromic layer 5 on the secondary electrode 6,
a step of applying a sealing material onto the primary electrode 2 to surround an outer edge of the first electrochromic layer 3 or applying a sealing material onto the secondary electrode 6 to surround an outer edge of the second electrochromic layer 5,
a step of preparing the electrolyte layer 4 and allowing the first electrochromic layer 3 and the second electrochromic layer 5 to face each other with the electrolyte layer 4 being interposed therebetween, thereby bonding the first support 1 and the second support 2 to each other, and
a step of curing the sealing material to form the sealing part 8.

In the step of carrying out the bonding, the first electrochromic layer 3 and the second electrochromic layer 5 are covered with a sealing material by pressing and spreading the sealing material.

As a result, the electrochromic sheet 100 is obtained.

### <Second embodiment>

Fig. 3 is a schematic cross-sectional view showing an example of an embodiment of an electrochromic sheet 200. The electrochromic sheet 200 of Fig. 3 is an example in which the electrochromic sheet 200 further has a first columnar conductive part 72 and a second columnar conductive part 62, which penetrate the sealing part 8 in the thickness direction, as compared with the electrochromic sheet 100 of Fig. 1, and other configurations and actions are common to the electrochromic sheet 100.

Further, in the electrochromic sheet 200, both the first columnar conductive part 72 and the second columnar conductive part 62 are electrically connected to the electrolyte layer 4.

In addition, the first columnar conductive part 72 penetrates the sealing part 8 and reaches the second support layer 7 from a first auxiliary electrode layer 71 provided on the primary electrode 2. Similarly, the second columnar conductive part 62 penetrates the sealing part 8 and reaches the first support layer 1 from a second auxiliary electrode layer 61 provided on the secondary electrode 6.

Hereinafter, the configuration and action different from those of the first embodiment will be described.

### [Electrode]

The primary electrode 2 and the secondary electrode 6 are each an electrode that supplies electrons to the gap between the primary electrode 2 and the secondary electrode 6 or receives electrons from the gap between the primary electrode 2 and the secondary electrode 6 in a case where a positive voltage or a negative voltage is applied to the first electrochromic layer 3, the electrolyte layer 4, and the second electrochromic layer 5.The primary electrode 2 is provided on a surface of the first electrochromic layer 3 opposite to the electrolyte layer 4 side.

The secondary electrode 6 is provided on a surface of the second electrochromic layer 5 opposite to the electrolyte layer 4 side.

The constituent materials of the primary electrode 2 and the secondary electrode 6 are not particularly limited as long as they are a conductive material having transparency; however, examples thereof include an oxide such as indium tin oxide (ITO), F-doped tin oxide (FTO), antimony tin oxide (ATO), indium zinc oxide (IZO), In₂O₃, SnO₂, Sb-containing SnO₂, or Al-containing ZnO; and Au, Pt, Ag, Cu, and an alloy containing these. Among these, one kind or two or more kinds can be used in combination.

Examples of the production method for each of the primary electrode 2 and the secondary electrode 6 include a vacuum deposition method, a sputtering method, and an ion plating method. In addition, examples thereof include, as a method in which the material of each of the primary electrode 2 and the secondary electrode 6 can be applied to form the primary electrode 2 and the secondary electrode 6, various printing methods such as a spin coating method, a casting method, a microgravure coating method, a gravure coating method, a bar coating method, a roll coating method, a wire bar coating method, a dip coating method, a slit coating method, a capillary coating method, a spray coating method, a nozzle coating method, a gravure printing method, a screen printing method, a flexo printing method, an offset printing method, a reverse printing method, and an inkjet printing method.

The average thicknesses of the primary electrode 2 and the secondary electrode 6 are adjusted such that an electric resistance value required for the oxidation-reduction reaction in the first electrochromic layer 3 and the second electrochromic layer 5 is obtained, and for example, in a case where ITO is used as a constituent material of the primary electrode 2 and the secondary electrode 6, the average thicknesses thereof are each independently set to preferably about 50 nm or more and about 200 nm or less, and more preferably set to about 100 nm or more and about 150 nm or less.

### [Columnar conductive part]

The first columnar conductive part 72 is provided as a wiring line so that it overlaps with the primary electrode 2 provided to be extended from the electrochromic element 10 when seen in a plan view and penetrates the sealing part 8 (see Fig. 3). In addition, the first columnar conductive part 72 is electrically connected to the primary electrode 2 through the first auxiliary electrode layer 71.

The first columnar conductive part 72 is exposed at an end part of a lens in a case where the electrochromic sheet 200 is processed such that an outer shape of the electrochromic sheet 200 has a lens shape, for example, in order to apply the electrochromic sheet 200 to a lens for an eye wear. As a result, the electrochromic element 10 can be electrically energized from the outside through the first columnar conductive part 72.

Similarly to the first columnar conductive part 72, the second columnar conductive part 62 is also exposed at an end part of a lens in a case where the electrochromic sheet 200 is processed such that an outer shape of the electrochromic sheet 200 has a lens shape, for example, in order to apply the electrochromic sheet 200 to a lens for an eye wear. As a result, the electrochromic element 10 can be electrically energized from the outside through the second columnar conductive part 62.

In this case, for example, the first columnar conductive part 72 can be positioned on the bridge side of the eye wear, and the second columnar conductive part 62 can be positioned on the temple side (the side opposite to the bridge side) of the eye wear.

In addition, the first columnar conductive part 72 and the second columnar conductive part 62 each independently have an average thickness that is set to preferably about 10 µm or more and about 100 µm or less, more preferably 20 µm or more and 80 µm or less, and still more preferably about 30 µm or more and about 70 µm or less.

The constituent materials of the first columnar conductive part 72 and the second columnar conductive part 62 may be any conductive paste having conductivity. As a result, the adhesiveness between the first columnar conductive part 72 and the sealing part 8, and the adhesiveness between the second columnar conductive part 62 and the sealing part 8 can be enhanced.

Hereinafter, the conductive paste will be described in detail.

### (Conductive paste)

The conductive paste according to the present embodiment can contain a conductive filler.

The conductive filler aggregates by subjecting the conductive paste to a curing treatment, thereby forming a conductive particle connecting structure. As a result, conductivity is exhibited, and adhesiveness to the electrolyte layer 4 or the like is obtained.

The conductive paste according to the present embodiment preferably contains, as the conductive filler, one or two or more selected from metal powders of gold, silver, copper, platinum, nickel, palladium, and alloys thereof, and a conductive carbon filler. Among those described above, it is preferable to use silver powder from the viewpoint of favorable conductivity and ease of handling.

The shape of the conductive filler is not particularly limited, and examples thereof include a spherical shape, a flake shape, and a scale shape.

The conductive paste according to the present embodiment can contain a curable resin. It is preferable to have at least one of an ultraviolet reactive functional group or a thermal reactive functional group.

In the present embodiment, since the sealing material and the conductive paste are both applied in a liquid state and brought into the curing step at the same time, it is preferable that the same type of curable resin is used in the sealing material and the conductive paste.

For the sealing material and the conductive paste, the same resin, additives, and manufacturing method may be used except that the filler has different insulating properties and different conductivity.

From the viewpoint of favorable coating properties, adhesiveness, and the like, the viscosity of the conductive paste is preferably 1 to 1,000 Pa·s, and more preferably 20 to 80 Pa·s.

### [Other electrodes]

The first auxiliary electrode layer 71 is provided to be laminated, as a wiring line, on a surface of the primary electrode 2 opposite to the first support layer 1, and it is electrically connected to the first columnar conductive part 72.

Similarly, the second auxiliary electrode layer 61 is provided to be laminated, as a wiring line, on a surface of the second electrode 14 opposite to the second support layer 7, and it is electrically connected to the second columnar conductive part 62.

The resistance values of the first auxiliary electrode layer 71 and the second auxiliary electrode layer 61 are respectively set to be smaller than the resistance values of the primary electrode 2 and the second electrode 14. Therefore, by constituting the wiring lines that are electrically connected to the electrochromic element 10 in each of the laminate of the primary electrode 2 and the first auxiliary electrode layer 71 and the laminate of the second electrode 14 and the second auxiliary electrode layer 61, it is possible to impart more excellent electrical conductivity to these wiring lines (laminates).

The constituent material of each of the first auxiliary electrode layer 71 and the second auxiliary electrode layer 61 is not particularly limited as long as it has a resistance value lower than the resistance values of the primary electrode 2 and the second electrode 14. However, a constituent material having excellent conductivity is used, and examples thereof include silver, aluminum, copper, chromium, and molybdenum. Among these, one kind or two or more kinds can be used in combination.

In addition, the first auxiliary electrode layer 71 and the second auxiliary electrode layer 61 each independently have an average thickness that is set to preferably about 1 nm or more and about 100 nm or less, and more preferably about 5 nm or more and about 50 nm or less. As a result, the function as the auxiliary electrode can be reliably imparted to the first auxiliary electrode layer 71 and the second auxiliary electrode layer 61.

It is noted that an interlayer, for example, an insulating porous layer or a protective layer may be provided between the respective layers between the primary electrode 2 and the secondary electrode 6.

Other configurations and action and effect are the same as those in the first embodiment.

### [Action and effect]

In a case of having a configuration as described above, the electrochromic sheet 200 can cause the electrochromic element 10 to undergo color development to exhibit a predetermined color, for example, by applying a positive voltage between the primary electrode 2 and the secondary electrode 6, and on the other hand, the electrochromic sheet 200 can cause the electrochromic element 10 to be decolored and transparent by applying a negative voltage between the primary electrode 2 and the secondary electrode 6.

### [Manufacturing method for electrochromic sheet]

The manufacturing method for an electrochromic sheet according to the present embodiment is not limited to a case where the number of the electrochromic layer is one, and it can also be applied to a case where there are a plurality of electrochromic layers.

Hereinafter, an example of a manufacturing method for the electrochromic sheet 200 will be described.

The manufacturing method for the electrochromic sheet 200 according to the present embodiment includes the following steps.

It has a step of disposing the primary electrode 2 on the first support layer 1,
a step of disposing the first electrochromic layer 3 on the primary electrode 2,
a step of applying a conductive paste onto the primary electrode 2 in a region that does not overlap with the first electrochromic layer 3 when seen in a plan view and applying a sealing material onto the primary electrode 2 to surround an outer periphery of the first electrochromic layer 3 and an outer periphery of the conductive paste,
a step of curing the sealing material to form a sealing part 8; and
a step of curing the conductive paste to form the first columnar conductive part 72.

In the present embodiment, the following steps are further provided:
a step of preparing the second support layer 7 and disposing the secondary electrode 6 on the second support layer 7,
a step of disposing the second electrochromic layer 5 on the secondary electrode 6, and
a step of preparing an electrolyte layer 4 and allowing the first electrochromic layer 3 and the second electrochromic layer 5 to face each other with the electrolyte layer 4 being interposed therebetween, thereby bonding the first support 1 and the second support 2 to each other.

It is noted that in the present embodiment, an example in which the first support layer 1 is used as a substrate and the first electrochromic layer 3, the electrolyte layer 4, and the second electrochromic layer 5 are laminated in this order will be described; however, the manufacturing method according to the present invention is not limited thereto.

In addition, the electrolyte layer 4 is disposed on the first electrochromic layer 3 in the bonding step; however, the electrolyte layer 4 may be disposed on the first electrochromic layer 3 or the second electrochromic layer 5 in advance.

In addition, the disposition of the primary electrode 2 and the secondary electrode 6 when seen in a plan view is appropriately designed so that the electrolyte layer 4 can be electrically energized.

In addition, the order of the steps is not limited thereto and can be appropriately changed as long as the effect of the present invention is not impaired.

Hereinafter, details of each step will be described.

### - Step of disposing primary electrode 2 -

First, the primary electrode 2 is disposed on the first support layer 1. The disposing method is not particularly limited, and examples thereof include a method of disposing the primary electrode 2 by forming a film of a conductive material using a sputtering method.

### - Step of disposing first electrochromic layer 3 -

Next, the first electrochromic layer 3 is disposed on the primary electrode 2. The disposing method is not particularly limited, and examples thereof include a method of applying a metal nanoparticle-containing sol solution onto the primary electrode 2, drying the metal nanoparticle-containing sol solution, and then applying an electrochromic material to support the electrochromic material on the metal nanoparticles, thereby forming the first electrochromic layer 3.

It is noted that since the sealing part 8, the columnar conductive part, and the like, which will be described later, are disposed on the primary electrode 2 in addition to the first electrochromic layer 3, the first electrochromic layer 3 (later, the electrochromic element 10) is disposed only in a part of the region of the primary electrode 2 when seen in a plan view.

### - Coating step for sealing material and conductive paste -

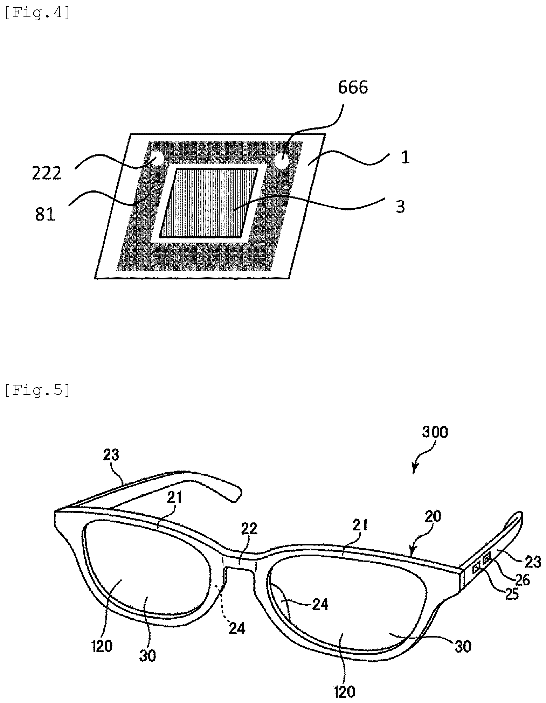

Fig. 4 is a perspective view showing the first support layer 1 that is coated with a sealing material 81, a conductive paste 222, and a conductive paste 666. It is noted that the primary electrode 2 is omitted in Fig. 4.

As shown in Fig. 4, the conductive paste 222 and the conductive paste 666 are applied onto the first support layer 1 in a region that does not overlap with the first electrochromic layer 3 when seen in a plan view, and the sealing material 81 is also applied to surround the outer periphery of the first electrochromic layer 3 and the outer periphery of each of the conductive paste 222 and the conductive paste 666.

The order of the coating with the conductive paste 222, the coating with the conductive paste 666, and the coating with the sealing material 81 is not particularly limited.

By applying the sealing material 81 onto the outer periphery of the first electrochromic layer 3, the sealing material 81 is pressed and spread in the bonding step described later, and the side surfaces of the electrolyte layer 4, the first electrochromic layer 3, and the second electrochromic layer 5 can be allowed to be covered with the sealing part 8.

In addition, in the present embodiment, the conductive paste 222 becomes the first columnar conductive part 72 described later, and the conductive paste 666 becomes the second columnar conductive part 62 described later. In addition, by applying the sealing material 81 to surround the outer periphery of each of the conductive paste 222 and the conductive paste 666, the first columnar conductive part 72 and the second columnar conductive part 62 can be subsequently such columnar conductive parts that penetrate the sealing part 8.

The coating method is not particularly limited, and a publicly known method can be used.

### - Step of disposing secondary electrode 6 -

The secondary electrode 6 is disposed on the second support layer 7 in the same manner as in the primary electrode 2. The disposing method is not particularly limited, and examples thereof include a method of disposing the secondary electrode 6 by forming a film of a conductive material using a sputtering method.

### - Step of disposing electrochromic layer 3 of second electrochromic layer 5 -

The second electrochromic layer 5 is disposed on the secondary electrode 6 in the same manner as in the first electrochromic layer 3. The disposing method is not particularly limited, and examples thereof include a method of applying a metal nanoparticle-containing sol solution onto the secondary electrode 6, drying the metal nanoparticle-containing sol solution, and then applying an electrochromic material to support the electrochromic material on the metal nanoparticles, thereby forming the second electrochromic layer 5.

### - Step of preparing electrolyte layer 4 -

As a method of forming the electrolyte layer 4, the same method as the above-described method can be used.

### - Bonding step -

The first electrochromic layer 3 and the second electrochromic layer 5 are allowed to face each other with the electrolyte layer 4 being interposed therebetween, whereby the first support 1 and the second support 2 are bonded to each other.

In this case, the side surfaces of the first electrochromic layer 3, the electrolyte layer 4, and the second electrochromic layer 5 are allowed to be covered with the sealing material 81 by pressing and spreading the sealing material 81.

### - Step of forming sealing part 8 -

The sealing material 81 is cured to form the sealing part 8. The sealing material 81 can be cured using a publicly known method, and the sealing material 81 can be cured, for example, by carrying out at least one of light irradiation or heating through the first support layer 1 and the second support layer 7.

### - Step of forming first columnar conductive part 72 and second columnar conductive part 62 -

The conductive paste 222 and the conductive paste 666 are cured to form the first columnar conductive part 72 and the second columnar conductive part 62, respectively. The conductive paste 222 and the conductive paste 666 can be cured using a publicly known method, and the conductive paste 222 and the conductive paste 666 can be cured, for example, by carrying out at least one of light irradiation or heating through the first support layer 1 and the second support layer 7.

In a case where the same type of curable resins are used as the sealing material, the conductive paste 222, and the conductive paste 666, the same type of curable resins can be cured at the same time, and the compatibility between the same type of curable resins is also good. Therefore, the adhesiveness between the sealing part 8 and the first columnar conductive part 72 and the adhesiveness between the sealing part 8 and the second columnar conductive part 62 can be further improved.

It is noted that the same type of curable resins is intended to include, for example, a case where resins having the same main skeleton, such as epoxy resins, are included.

As described above, the electrochromic sheet 200 according to the present embodiment is obtained.

### 2. Electrochromic device

An electrochromic device according to the present embodiment has the electrochromic sheet 100 or the electrochromic sheet 200, which is described above, and further has other means as necessary.

The other means is not particularly limited and can be appropriately selected according to the use application. Examples thereof include a power source, a fixing means, and a control means.

Examples of the electrochromic device include an eye wear, a smart glass, a head-mounted display, an augmented reality (AR) display, a virtual reality (VR) display, a mixed reality (MR) display, photochromic spectacles, binoculars, opera glasses, bicycle goggles, a watch, an electronic paper, an electronic album, an electronic advertisement board, a photochromic cover, an electrochromic display, an in-vehicle display, an in-vehicle cover, and an antiglare room mirror for an automobile.

### 3. Lens

Next, a lens that uses the electrochromic sheet 100 or the electrochromic sheet 200, which is described above, will be described. It is noted that in the third embodiment and the second embodiment, although an example in which the electrochromic sheet 150 is used is described, the electrochromic sheet 100 or the electrochromic sheet 200 may be used instead of the electrochromic sheet 150. In addition, the configuration of each layer can be the same as the configuration described in the electrochromic sheet 100.

### <Third embodiment>

Hereinafter, in the present embodiment, in a manufacturing step for a lens in which a sheet member of an optical system is laminated on a surface, a positioning structure for aligning a sheet member at an appropriate position in a cavity is provided in the sheet member and the cavity. As a result, the occurrence of the positional deviation of the sheet member on the lens surface or the defect (for example, the positional deviation, the deformation, and the like or cracking of the sheet member) in an injection step for a lens resin material 34 is avoided.

In the following description, a lens for glasses to which an electrochromic sheet is applied as a sheet member of an optical system and sunglasses having such a lens for glasses will be exemplified.

<Sunglasses>

Fig. 5 is a perspective view showing sunglasses 300 including a lens 30 having a curved sheet 120 in which an electrochromic sheet 150 according to the present embodiment is formed to have a curved shape. It is noted that in the following description, in a case where the sunglasses 300 are worn on the head of the user, a surface of the lens 30 on the eye side of the user is referred to as a back surface, and a surface of the lens 30 opposite to the back surface is referred to as a front surface.

However, the sunglasses 300 are an example and may be a smart glass, an AR display, a VR display, an MR display, or the like.

As shown in Fig. 5, the sunglasses 300 include a frame 20 and the lens 30 (lens for glasses). The lens 30 may have a light collecting function or may not have a light collecting function.

The frame 20 is worn on the head of the user and is used to dispose the lens 30 in the vicinity and in front of the eyes of the user.

The frame 20 includes a rim part 21, a bridge part 22, a temple part 23, and a nose pad part 24.

The rim part 21 has a ring shape, one rim part 21 is provided in correspondence to each of the right eye and the left eye, and the lens 30 is mounted on the inner side of the rim part 21. As a result, the user can visually recognize the external information through the lens 30.

The lens 30 includes the curved sheet 120 that is formed to have a curved shape by subjecting the electrochromic sheet 150 to thermal bending processing. The lens 30 is a lens in which the color development and decoloration at any timing are carried out reversibly by carrying out switching of the application of the voltage to the electrochromic element 60 included in the electrochromic sheet 150. In addition, in a case where the lens 30 is mounted on the inner side of the rim part 21, the lens 30 includes connection terminals at positions corresponding to connecting parts where the bridge part 22 and the temple part 23 are respectively connected to the rim part 21. These connection terminals are electrically connected, through a wiring line, to a switch 25 and a battery 26 which are provided in the temple part 23 described later.

The bridge part 22 has a rod shape and is positioned in front of an upper part of the nose of the user in a case of being worn on the head of the user, and it connects a pair of the rim parts 21.

The temple part 23 has a temple shape and is connected to an edge part on the opposite side of the position where the bridge part 22 of each rim part 21 is connected. In a case of being worn on the head of the user, the temple part 23 is hung on the ear of the user.

The temple part 23 has the switch 25 that is exposed on the surface of the temple part 23 in an operable manner and the battery 26 built in the temple part 23. The switch 25 and the battery 26 are electrically connected, through a wiring line, to a connection terminal provided in the lens 30. As a result, the operation of the switch 25 makes it possible to carry out switching between the application of the positive voltage and the negative voltage and switching of the non-application of the voltage with respect to the electrochromic element 60 of the curved sheet 120 provided in the lens 30.

The nose pad part 24 is provided at an edge part corresponding to the nose of the user in each rim part 21 in a case where the sunglasses 300 are worn on the head of the user, and the nose pad part 24 abuts on the nose of the user, and in this case, it has a shape corresponding to an abutting part of the nose of the user. As a result, the wearing state can be stably maintained.

A constituent material of each part that constitutes the frame 20 is not particularly limited, and for example, various metal materials, various resin materials, and the like can be used. It is noted that the shape of the frame 20 is not limited to the illustrated shape as long as the frame 20 can be worn on the head of the user.

In addition, the sunglasses 300 may have a configuration in which a frame is not provided from the viewpoint of fashionability, light weight, and the like, in addition to the configuration in which the frame 20 is provided.

Further, in the present embodiment, although the glasses including the lens 30 are applied to the sunglasses 300, the present invention is not limited thereto. Therefore, the glasses may be, for example, prescription glasses, non-prescription glasses, goggles that protect the eyes from wind and rain, dust, chemicals, and the like.

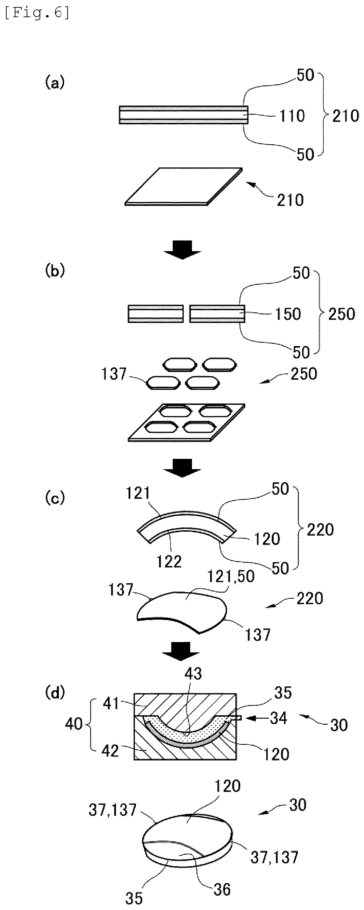

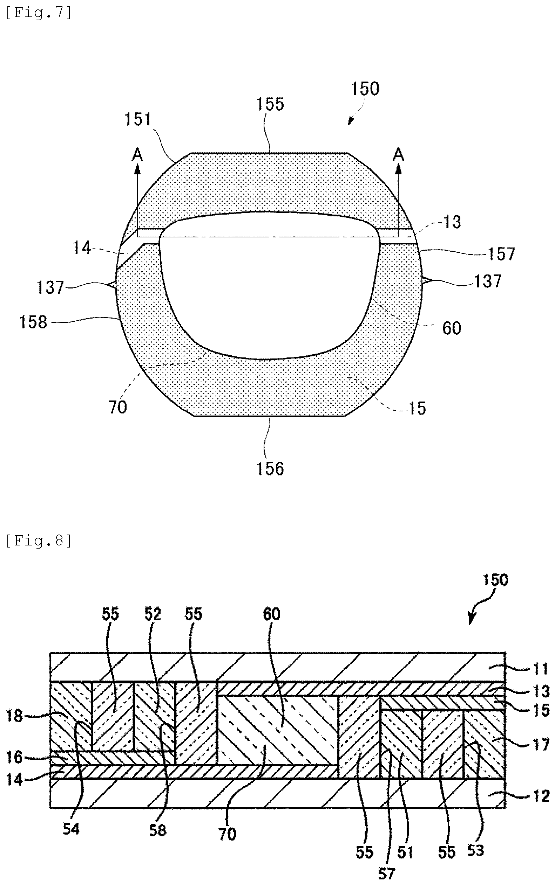

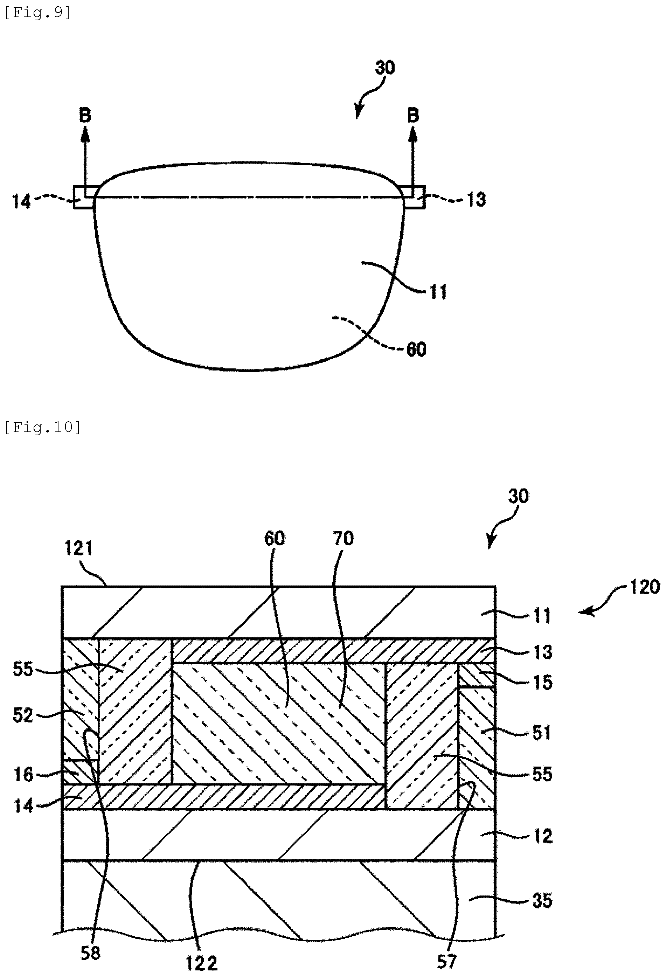

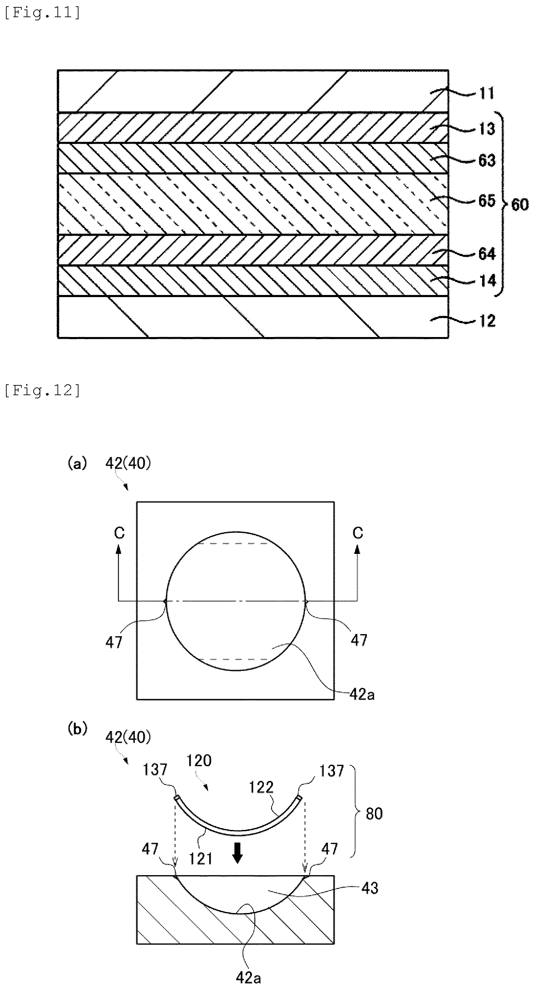

Fig. 6 is a schematic view for describing a manufacturing method for a lens 30 having a curved sheet 120 in which the electrochromic sheet 150 is formed to have the curved shape. Fig. 7 is a plan view of the electrochromic sheet 150. Fig. 8 is a longitudinal cross-sectional view taken along a line A-A in a main portion of the electrochromic sheet 150 shown in Fig. 7. Fig. 9 is a plan view showing the lens 30 having the curved sheet 120. Fig. 10 is a longitudinal cross-sectional view taken along a line B-B in a main portion of the lens 30 shown in Fig. 9. Fig. 11 is a longitudinal cross-sectional view showing an electrochromic element 60 that is provided in the electrochromic sheet 150 shown in Fig. 7 and the lens 30 shown in Fig. 9. Figs. 12(a) and 12(b) are a view showing a lower mold 42 of a metal mold 40, where Fig. 12(a) is a bottom view (a view obtained in a case of being viewed from the side where a cavity 43 is formed), and Fig. 12(b) is a longitudinal cross-sectional view taken along a line C-C of Fig. 12(a). It is noted that in Fig. 12(b), the curved sheet 120 is shown in order to describe the relationship between the curved sheet 120 and the lower mold 42.

In the following description, for convenience of description, the upper sides of Fig. 6, Fig. 8, Fig. 10, and Fig. 11, and the front sides of Fig. 7 and Fig. 9 on the paper surface are referred to as "upper", and the lower sides of Fig. 6, Fig. 8, Fig. 10, and Fig. 11, and the back sides of Fig. 7 and Fig. 9 on the paper surface are referred to as "lower". In addition, in Fig. 10, although the curved sheet 120 actually has a curved shape, the curved sheet 120 is described as having a flat plate shape for convenience of description.

### <Lens>

The lens 30 is a member having light transmittability and having a plate shape in which the entire shape is curved outward, and the lens 30 includes a resin layer 35 (molding layer) which is a lens main body, and a curved sheet 120 which is provided on a curved convex surface 36 of the resin layer 35. As described above, the lens 30 may have a light collecting function or may not have a light collecting function.

The curved sheet 120 is a sheet member that is formed to have a curved shape including a curved convex surface 121 and a curved concave surface 122, which are provided by subjecting the electrochromic sheet 150 having a flat sheet shape to thermal bending processing under heating.

### <Resin layer (lens main body)>

The resin layer 35 is a lens main body, and it has light transmittability and is positioned on a back side of the lens 30. In a case where a light collecting function is imparted to the lens 30, the resin layer 35 has a light collecting function.

The constituent material of the resin layer 35 is not particularly limited as long as it is a resin material having light transmittability, and examples thereof include various thermoplastic resins and various curable resins such as thermosetting resins and photocurable resins. Among these, one kind or two or more kinds can be used in combination.

Examples of the resin material include polyolefins such as polyethylene, polypropylene, and an ethylene-propylene copolymer, polyesters such as polyvinyl chloride, polystyrene, polyamide, polyimide, polycarbonate, poly-(4-methylpentene-1), an ionomer, an acrylic resin, polymethyl methacrylate, an acrylonitrile-butadiene-styrene copolymer (ABS resin), triacetyl cellulose (TAC), an acrylonitrile-styrene copolymer (AS resin), a butadiene-styrene copolymer, polyethylene terephthalate (PET), and polybutylene terephthalate (PBT), polyether, polyether ketone (PEK), polyether ether ketone (PEEK), polyetherimide, polyacetal (POM), polyphenylene oxide, polysulfone, polyether sulfone, polyphenylene sulfide, polyarylate, an aromatic polyester (liquid crystal polymer), polytetrafluoroethylene, polyvinylidene fluoride, other fluorine-based resin, epoxy resin, phenol resin, urea resin, melamine resin, silicone resin, polyurethane, and the like, and copolymers, blending products, and polymer alloys, which are mainly composed of these resins. Among these, it is preferably a resin material that is the same as or identical to the resin material constituting the first substrate 11 of the curved sheet 120 described later as a main material.

As a result, the adhesiveness between the resin layer 35 and the curved sheet 120 can be improved. In addition, since the difference in refractive index between the resin layer 35 and the curved sheet 120 (first substrate 11) can be set to be low, the irregular reflection of light can be precisely suppressed or prevented between the resin layer 35 and the curved sheet 120. Therefore, light can be transmitted between the resin layer 35 and the curved sheet 120 with excellent light transmittance.

It is noted that the difference in refractive index between the resin layer 35 and the first substrate 11 of the curved sheet 120 is preferably 0.2 or less and more preferably 0.1 or less. As a result, the effect obtained by setting the difference in refractive index to be low can be more remarkably exhibited.

The thickness of the resin layer 35 is not particularly limited, and for example, it is preferably 0.5 mm or more and 20.0 mm or less, and more preferably 1.0 mm or more and 10.0 mm or less. As a result, it is possible to achieve both a relatively high strength and a reduction in weight in the lens 30.

### <Electrochromic sheet>

The shape of the electrochromic sheet 150 when seen in a plan view will be described.

As shown in Fig. 7, the electrochromic sheet 150 has an EC sheet main body 151 having a substantially rectangular shape when seen in a plan view and notches 137 that are integrally protruded in an outward direction from a plurality of outer edge places of the EC sheet main body 151. The notch 137 functions as one element of a positioning structure 80 in a case where the electrochromic sheet 150 is subjected to curving processing and then the curved sheet 120 is disposed in the cavity 43 of the metal mold 40. The function of the positioning structure 80 refers to both a function of disposing the curved sheet 120 at an appropriate position in the metal mold 40 and a function of preventing the curved sheet 120 from being deviated due to an injection force in a case where the lens resin material 34 is injected into the cavity 43 of the metal mold 40, and the positioning structure 80 needs only to have at least one of these functions.

As the shape of the EC sheet main body 151, various shapes such as a rectangular shape, a circular shape, and an elliptical shape can be employed. The shape to be employed can be appropriately selected; however, in a case of considering a shape to be trimmed in a case of obtaining the final lens 30 and an effective utilization rate in a case of obtaining the electrochromic sheet 150, by carrying out individualization, from the element sealing and connecting sheet 110 described later, it is preferable to employ a substantially rectangular shape that is laterally long when seen in a plan view.

In the present embodiment, for example, as shown in Fig. 8, the shape is a laterally long shape in which the upper side and the lower side having a circular shape when seen in a plan view are removed, and specifically, the shape is such that an upper side 155 and a lower side 156 are linear long sides, and a right side 157 and a left side 158 are curved short sides (arcs of the original circular shape).

The notches 137 are provided at the right side 157 and the left side 158, respectively, so that they are symmetrical with each other, that is, one notch 137 is provided at each of the positions facing each other.

Here, the notch 137 has a triangular shape when seen in a plan view. As the shape of the notch 137, various shapes such as a semicircular shape and a quadrangular shape can be employed in addition to those described above. In addition, the shapes and sizes of the two notches 137 may be different from each other. In a case where the sizes and shapes of the two notches 137 are different from each other, it is easy to recognize the left and the right of the electrochromic sheet 150. In addition, the number of notches 137 may be plural, and in this case, the number of left notches 137 and the number of right notches 137 may be different from each other.

Next, a laminated structure of the electrochromic sheet 150 will be described.

As shown in Fig. 7 and Fig. 8, the electrochromic sheet 150 includes a first substrate 11, a second substrate 12, a sealing part 55, an electrochromic element 60, a first conductive part 17, a second conductive part 18, a third conductive part 51, a fourth conductive part 52, a first auxiliary electrode 15, and a second auxiliary electrode 16.

Hereinafter, each member that constitutes the electrochromic sheet 150 will be described.

The first substrate 11 supports another member including the electrochromic element 60 and constitutes the outermost layer of the electrochromic sheet 150, in which another member including the electrochromic element 60 is disposed between the first substrate 11 and the second substrate 12, and the first substrate 11 has a function as a protective layer that protects the electrochromic element 60 or the like.

In the electrochromic sheet 150, the first substrate 11 and the second substrate 12 constitute the outermost layer of the electrochromic sheet 150, and thus another member including the electrochromic element 60 is not exposed to the surface of the electrochromic sheet 150. Therefore, in a case where the electrochromic sheet 150 is applied to the lens 30 including the curved sheet 120 having a curved shape, it is possible to reliably prevent sand dust, rain, and the like from colliding with the electrochromic element 60 or the electrochromic element 60 from being worn by another member or the like. As a result, it is possible to reliably prevent the characteristics of the electrochromic element 60 from being adversely affected by the collision or friction.

In addition, the first substrate 11 may be an extended substrate or may be an unextended substrate.

Further, the refractive index of the first substrate 11 at a wavelength of 589 nm is preferably 1.3 or more and 1.8 or less and more preferably 1.4 or more and 1.65 or less. In a case of setting the refractive index n1 of the first substrate 11 to be in the above-described numerical value range, it is possible to precisely suppress or prevent the inhibition of the function as the electrochromic element 60 that is capable of carrying out switching between color development (coloration) and decoloration at any timing by carrying out switching ON/OFF with the switch 25.

The average thickness of the first substrate 11 is preferably set to 0.1 mm or more and 10.0 mm or less, and more preferably set to 0.3 mm or more and 5.0 mm or less. In a case where the average thickness of the first substrate 11 is set within such a range as described above, it is possible to precisely suppress or prevent the bending of the electrochromic sheet 150 while achieving thinning of the electrochromic sheet 150.

The second substrate 12 is disposed to face the first substrate 11, and it supports another member including the electrochromic element 60 and constitutes the outermost layer of the electrochromic sheet 150, in which another member including the electrochromic element 60 is disposed between the first substrate 11 and the second substrate 12, and the second substrate 12 has a function as a protective layer that protects the electrochromic element 60.

In the electrochromic sheet 150, the first substrate 11 and the second substrate 12 constitute the outermost layer of the electrochromic sheet 150, and thus another member including the electrochromic element 60 is not exposed to the surface of the electrochromic sheet 150. Therefore, in a case where the electrochromic sheet 150 is applied to the lens 30 including the curved sheet 120 having a curved shape, it is possible to reliably prevent sand dust, rain, and the like from colliding with the electrochromic element 60 or the electrochromic element 60 from being worn by another member or the like. As a result, it is possible to reliably prevent the characteristics of the electrochromic element 60 from being adversely affected by the collision or friction.

In addition, the refractive index of the second substrate 12 at a wavelength of 589 nm may be the same as or different from the refractive index n1 of the first substrate 11; however, it is preferably 1.3 or more and 1.8 or less and more preferably 1.4 or more and 1.65 or less. In a case of setting the refractive index n2 of the second substrate 12 to be in the above-described numerical value range, it is possible to precisely suppress or prevent the inhibition of the function as the electrochromic element 60 that is capable of carrying out switching between color development and decoloration at any timing by carrying out switching ON/OFF with the switch 25.

In addition, the average thickness of the second substrate 12 may be the same as or different from the average thickness of the first substrate 11; however, it is, for example, preferably 0.1 mm or more and 10.0 mm or less, and more preferably 0.3 mm or more and 5.0 mm or less. In a case where the average thickness of the second substrate 12 is set within such a range as described above, it is possible to precisely suppress or prevent the bending of the electrochromic sheet 150 while achieving thinning of the electrochromic sheet 150.

The electrochromic element 60 is a light emitting element that is capable of carrying out switching between color development (coloration) and decoloration at any timing by carrying out switching ON/OFF with the switch 25, and the electrochromic element 60 is provided in a colored region 70 partitioned by the sealing part 55.

In the present embodiment, the electrochromic element 60 includes a first electrode 13 and a first electrochromic layer 63, which are sequentially laminated on the first substrate 11 toward the side of the second substrate 12, a second electrode 14 and a second electrochromic layer 64, which are sequentially laminated on the second substrate 12 toward the side of the first substrate 11, and an electrolyte layer 65 that has been subjected filling between the first electrochromic layer 63 and the second electrochromic layer 64 (see Fig. 11).

Each of the first electrode 13 and the second electrode 14 is an electrode that supplies electrons to the gap between the first electrode 13 and the second electrode 14 or receives electrons from the gap between the first electrode 13 and the second electrode 14 in a case where a positive voltage or a negative voltage is applied to the electrochromic element 60 by carrying out switching with the switch 25.

The constituent materials of the first electrode 13 and the second electrode 14 are not particularly limited as long as they are a conductive material having transparency; however, examples thereof include an oxide such as indium tin oxide (ITO), F-doped tin oxide (FTO), antimony tin oxide (ATO), indium zinc oxide (IZO), In₂O₃, SnO₂, Sb-containing SnO₂, or Al-containing ZnO; and Au, Pt, Ag, Cu, and an alloy containing these. Among these, one kind or two or more kinds can be used in combination.

The average thicknesses of the first electrode 13 and the second electrode 14 are adjusted so that an electric resistance value required for the oxidation-reduction reaction of the electrochromic layers 63 and 64 is obtained, and for example, in a case where ITO is used as a constituent material of the first electrode 13 and the second electrode 14, the average thicknesses thereof are each independently set to preferably about 50 nm or more and about 200 nm or less, and more preferably set to about 100 nm or more and about 150 nm or less.

The first electrochromic layer 63 is a layer that contains, as a main material, a material that exhibits coloration by an oxidation reaction, whereby the layer undergoes coloration.

The material that is contained as a main material in the first electrochromic layer 63 and exhibits coloration by an oxidation reaction is not particularly limited, and examples thereof include a polymerized substance obtained by polymerizing a composition containing a radically polymerizable compound having a triarylamine, a bisacridan compound, a Prussian blue-type complex, and nickel oxide. Among these, one kind or two or more kinds can be used in combination.

The average thickness of such a first electrochromic layer 63 is not particularly limited; however, it is preferably about 0.1 µm or more and about 30 µm or less and more preferably about 0.4 µm or more and about 10 µm or less.

The second electrochromic layer 64 is a layer that contains, as a main material, an electrochromic material which exhibits coloration from transparency by a reduction reaction, whereby the layer undergoes coloration.

It is preferable that an electrochromic material having the same color tone as the first electrochromic layer 63 is used for the second electrochromic layer 64. This makes it possible to improve the maximum color optical density, and as a result, it is possible to improve the contrast.

In addition, in a case where a material having a different color tone is used in contrast to the above-described case, color mixing can be carried out. In addition, since the driving voltage for the electrochromic element 60 can be effectively reduced by carrying out coloration through the oxidation reaction and the reduction reaction on the sides of both electrodes of the first electrode 13 and the second electrode 14, the repetitive durability of the electrochromic element 60 can be improved.

The material that is contained as a main material in the second electrochromic layer 64 and exhibits coloration by a reduction reaction is not particularly limited, and examples thereof include an inorganic electrochromic compound, an organic electrochromic compound, and a conductive polymer. Among these, one kind or two or more kinds can be used in combination.

The average thickness of such a second electrochromic layer 64 is not particularly limited; however, it is preferably about 0.2 µm or more and about 5.0 µm or less and more preferably about 1.0 µm or more and about 4.0 µm or less. In a case where the average thickness is less than 0.2 µm, there is a concern that a color optical density may be hardly obtained depending on the kind of the electrochromic material, and in a case where the average thickness is more than 5.0 µm, the manufacturing cost increases, and there is a concern that the visibility may deteriorate due to coloration depending on the kind of the electrochromic material.

The electrolyte layer 65 is subjected to filling between the first electrochromic layer 63 and the second electrochromic layer 64, and contains an electrolyte having ion conductivity.

It is noted that an interlayer, for example, an insulating porous layer or a protective layer may be provided between the respective layers between the first electrode 13 and the second electrode 14.

By adopting such a configuration as described above, the electrochromic element 60 is allowed to be capable of carrying out switching between color development (coloration) and decoloration at any timing by switching ON/OFF of the switch 25.

The sealing part 55 is disposed between the first substrate 11 and the second substrate 12 and has a function of partitioning the colored region 70 to seal the electrochromic element 60 in the colored region 70.

As described above, the electrochromic sheet 150 has a configuration in which the electrochromic element 60 is disposed in the colored region 70 partitioned by the sealing part 55 between the first substrate 11 and the second substrate 12.

In addition, in the electrochromic sheet 150 having such a configuration, each of the first electrode 13 and the second electrode 14 provided in the electrochromic element 60 is laid out (extended) beyond the colored region 70 partitioned by the sealing part 55 as a patterned wiring line at positions corresponding to connecting parts where the bridge part 22 and the temple part 23 are connected to the rim part 21, in a case where the lens 30 is formed using the electrochromic sheet 150 and then mounted on the inner side of the rim part 21, as shown in Fig. 7 to Fig. 10.

As described above, the first conductive part 17 is provided as a wiring line to fill a first hole part 53, which is a through-hole penetrating the sealing part 55, such that the first conductive part 17 overlaps with the first electrode 13 that is provided to be extended from the colored region 70, when seen in a plan view. That is, the first electrode 13, which is provided as a wiring line beyond the colored region 70 between the first substrate 11 and the sealing part 55 and between the first substrate 11 and the first conductive part 17, is extended until it reaches the first conductive part 17.

In addition, the first conductive part 17 is electrically connected to the first electrode 13 through the first auxiliary electrode 15, and further, the first conductive part 17 is exposed at a position on the side of the bridge part 22 (the right side in Fig. 7 and Fig. 8) in a case where the lens 30 is formed using the electrochromic sheet 150 at an end part of the electrochromic sheet 150 along the thickness direction and then is mounted on the inner side of the rim part 21.

In addition, the second conductive part 18 is provided as a wiring line to fill a second hole part 54, which is a through-hole penetrating the sealing part 55, such that the second conductive part 18 overlaps with the second electrode 14 that is provided to be extended from the colored region 70, when seen in a plan view. That is, the second electrode 14, which is provided as a wiring line beyond the colored region 70 between the second substrate 12 and the sealing part 55 and between the second substrate 12 and the second conductive part 18, is extended until it reaches the second conductive part 18.

In addition, the second conductive part 18 is electrically connected to the second electrode 14 through the second auxiliary electrode 16, and further, the second conductive part 18 is exposed at a position on the side of the temple part 23 (the left side in Fig. 7 and Fig. 8) in a case where the lens 30 is formed using the electrochromic sheet 150 at an end part of the electrochromic sheet 150 along the thickness direction and then is mounted on the inner side of the rim part 21.

As described above, at the end part of the electrochromic sheet 150 along the thickness direction, the first conductive part 17 and the second conductive part 18 are exposed at positions different from each other, such as the side of the bridge part 22 and the side of the temple part 23. In addition, the first conductive part 17 and the second conductive part 18 are electrically connected to the first electrode 13 and the second electrode 14, respectively.

As a result, a voltage can be applied between the first electrode 13 and the second electrode 14 through the first conductive part 17 and the second conductive part 18 which are exposed at the end part of the electrochromic sheet 150 along the thickness direction. That is, the first conductive part 17 and the second conductive part 18 can be used as terminals in a case where a voltage is applied between the first electrode 13 and the second electrode 14. Therefore, in a case where a voltage is applied between the first electrode 13 and the second electrode 14 through the first conductive part 17 and the second conductive part 18, after the step of obtaining the curved sheet 120 by bending processing described later or after the step of removing the protective film 50, the examination of the electrochromic element 60 provided in the inside of the electrochromic sheet 150 can be easily carried out. As a result, it is possible to easily know the presence or absence of the occurrence of the defect in the electrochromic element 60 provided in the inside of the electrochromic sheet 150.

The constituent materials of the first conductive part 17 and the second conductive part 18 are not particularly limited as long as they are conductive materials, and examples thereof include a conductive paste such as a silver paste, and other examples thereof include metals such as gold and copper, and an alloy thereof.

In addition, the first conductive part 17 and the second conductive part 18 each independently have an average thickness that is set to preferably about 20 µm or more and about 100 µm or less, and more preferably about 40 µm or more and about 80 µm or less. In a case where the average thicknesses of the first conductive part 17 and the second conductive part 18 which are exposed at the end part of the electrochromic sheet 150 along the thickness direction are set within such a range as described above, the first conductive part 17 and the second conductive part 18 can be easily used as terminals in a case where a voltage is applied between the first electrode 13 and the second electrode 14.

It is noted that in the present invention, although the first conductive part 17 and the second conductive part 18 are exposed, as described above, at positions different from each other at the end part of the electrochromic sheet 150 along the thickness direction, the exposure of the first conductive part 17 and the second conductive part 18 at the end part is realized as follows. That is, in a case of obtaining the individualized electrochromic sheet 150 by punching out the element sealing and connecting sheet 110 in the thickness direction in correspondence to each electrochromic element 60, the punching-out can be realized by carrying out the punching-out to pass through the first conductive part 17 and the second conductive part 18 when seen in a plan view.

It is noted that the first electrode 13 and the second electrode 14 may be formed in a portion that serves as the notch 137. That is, in the notch 137, the first conductive part 17 and the second conductive part 18 are configured to be exposed at the end part along the thickness direction. As a result, it is easy to grasp a portion where a terminal of an examination device is applied in a case of the examination of the electrochromic element 60. In addition, since the notch 137 protrudes in an outward direction, the exposed area is widened, which makes it easier to apply the terminal.

In addition, a part of the wall part (inner peripheral surface) of each of the first hole part 53 and the second hole part 54 is deleted due to punching out the element sealing and connecting sheet 110, which passes through the first conductive part 17 and the second conductive part 18; however, in the present specification, a hole part in which such deletion has occurred is also included.

Further, in the present embodiment, both the first hole part 53 and the second hole part 54 are through-holes that penetrate the sealing part 55 in the thickness direction; however, the present embodiment is not limited thereto. The first hole part 53 may be formed from the side of the first substrate 11 toward the side of the second substrate 12, and the sealing part 55 may remain at the bottom part of the first hole part 53. The second hole part 54 may be formed from the side of the second substrate 12 toward the side of the first substrate 11, and the sealing part 55 may remain at the apex part of the second hole part 54.

The third conductive part 51 is provided as a wiring line to fill the third hole part 57 which is a through-hole provided to penetrate the sealing part 55, at a position that overlaps, when seen in a plan view, with the first electrode 13 provided to be extended from the colored region 70 and is located on the side of the colored region 70 (inner side) with respect to the first hole part 53, that is, at a position between the first conductive part 17 and the electrochromic element 60 when seen in a plan view (see Fig. 8). In addition, the third conductive part 51 is electrically connected to the first electrode 13 through the first auxiliary electrode 15.

The third conductive part 51 is exposed at a position on the side of the bridge part 22 (the right side in Fig. 9 and Fig. 10) in a case where the edge part of the lens 30 is subjected to the trimming processing in order to mount the lens 30 obtained by using the electrochromic sheet 150 (curved sheet 120) on the inner side of the rim part 21 as shown in Fig. 9 and Fig. 10 for the intended purpose of obtaining a cutout that is cut out in accordance with the shape (lens shape) of the rim part 21.

In addition, the fourth conductive part 52 is provided as a wiring line to fill the fourth hole part 58 which is a through-hole provided to penetrate the sealing part 55, at a position that overlaps, when seen in a plan view, with the second electrode 14 provided to be extended from the colored region 70 and is located on the side of the colored region 70 (inner side) with respect to the second hole part 54, that is, at a position between the second conductive part 18 and the electrochromic element 60 when seen in a plan view (see Fig. 8). In addition, the fourth conductive part 52 is electrically connected to the second electrode 14 through the second auxiliary electrode 16.

The fourth conductive part 52 is exposed at a position on the side of the temple part 23 (the left side in Fig. 9 and Fig. 10) in a case where the edge part of the lens 30 is subjected to the trimming processing in order to mount the lens 30 obtained by using the electrochromic sheet 150 (curved sheet 120) on the inner side of the rim part 21 as shown in Fig. 9 and Fig. 10 for the intended purpose of obtaining a cutout that is cut out in accordance with the shape of the rim part 21.

For the intended purpose of mounting the lens 30 on the inner side of the rim part 21 in this way, in a case where the lens 30 is subjected to trimming processing of cutting the edge part thereof to obtain a cutout, at the end part of the electrochromic sheet 150 (curved sheet 120) along the thickness direction, the third conductive part 51 and the fourth conductive part 52 are exposed at positions different from each other, such as the side of the bridge part 22 and the side of the temple part 23. In addition, the third conductive part 51 and the fourth conductive part 52 are electrically connected to the first electrode 13 and the second electrode 14, respectively.

As a result, in a case where the lens 30 (cutout) that has been subjected to the trimming processing is mounted on the inner side of the rim part 21, each of the third conductive part 51 and the fourth conductive part 52 constitutes a connection terminal that is electrically connected, through a wiring line, to the switch 25 and the battery 26, which are provided in the temple part 23.

The constituent materials of the third conductive part 51 and the fourth conductive part 52 may be any conductive material, and for example, the same ones as those described as the constituent materials of the first conductive part 17 and the second conductive part 18 can be used.

In addition, the third conductive part 51 and the fourth conductive part 52 each independently have an average thickness that is preferably set to about 20 µm or more and about 100 µm or less, and more preferably about 40 µm or more and about 80 µm or less. In the lens 30 that has been subjected to the trimming processing, in a case where the average thicknesses of the third conductive part 51 and the fourth conductive part 52 which are exposed at the end part of the electrochromic sheet 150 (curved sheet 120) along the thickness direction are set within such a range as described above, the third conductive part 51 and the fourth conductive part 52 can be easily used as a connection terminal that is electrically connected to the switch 25 and the battery 26 through a wiring line.

It is noted that although a part of the wall part (inner peripheral surface) of each of the third hole part 57 and the fourth hole part 58 is deleted due to the trimming processing on the lens 30, a hole part in which such deletion has occurred is also included in the present specification.

Further, in the present embodiment, both the third hole part 57 and the fourth hole part 58 are through-holes that penetrate the sealing part 55 in the thickness direction; however, the present embodiment is not limited thereto. The third hole part 57 may be formed from the side of the first substrate 11 toward the side of the second substrate 12, and the sealing part 55 may remain at the bottom part of the third hole part 57 and the fourth hole part 58 may be formed from the side of the second substrate 12 toward the side of the first substrate 11, and the sealing part 55 may remain at the apex part of the fourth hole part 58.

In addition, in the present embodiment, the first hole part 53 and the third hole part 57, and the second hole part 54 and the fourth hole part 58 are respectively provided in the sealing part 55 as hole parts different from each other, that is, as separate bodies; however, the present embodiment is not limited thereto. For example, the first hole part 53 and the third hole part 57 may be composed of one integrally formed hole part without the sealing part 55 being interposed therebetween, and the second hole part 54 and the fourth hole part 58 may be composed of one integrally formed hole part without the sealing part 55 being interposed therebetween.

The first auxiliary electrode 15 is provided to be laminated on a surface of the first electrode 13 opposite to the first substrate 11, where the first electrode 13 is provided as a wiring line to be extended from the colored region 70, and the first auxiliary electrode 15 is electrically connected to the first conductive part 17 formed in the first hole part 53 and the third conductive part 51 formed in the third hole part 57. That is, the first auxiliary electrode 15 that electrically connects the first electrode 13, the first conductive part 17, and the third conductive part 51 to each other is formed between the first electrode 13 and the first conductive part 17 and between the first electrode 13 and the third conductive part 51.

In addition, the second auxiliary electrode 16 is provided to be laminated on a surface of the second electrode 14 opposite to the second substrate 12, where the second electrode 14 is provided as a wiring line to be extended from the colored region 70, and the second auxiliary electrode 16 is electrically connected to the second conductive part 18 formed in the second hole part 54 and the fourth conductive part 52 formed in the fourth hole part 58. That is, the second auxiliary electrode 16 that electrically connects the second electrode 14, the second conductive part 18, and the fourth conductive part 52 to each other is formed between the second electrode 14 and the second conductive part 18 and between the second electrode 14 and the fourth conductive part 52.

The resistance values of the first auxiliary electrode 15 and the second auxiliary electrode 16 are respectively set to be smaller than the resistance values of the first electrode 13 and the second electrode 14. Therefore, by constituting the wiring lines that are electrically connected to the electrochromic element 60 in each of the laminate of the first electrode 13 and the first auxiliary electrode 15 and the laminate of the second electrode 14 and the second auxiliary electrode 16, it is possible to impart more excellent conductivity to these wiring lines (laminates).

The constituent material of each of the first auxiliary electrode 15 and the second auxiliary electrode 16 is not particularly limited as long as it has a resistance value lower than the resistance values of the first electrode 13 and the second electrode 14. However, a constituent material having excellent conductivity is used, and examples thereof include silver, aluminum, copper, chromium, and molybdenum. Among these, one kind or two or more kinds can be used in combination.

In addition, the first auxiliary electrode 15 and the second auxiliary electrode 16 each independently have an average thickness that is set to preferably about 1 nm or more and about 100 nm or less, and more preferably about 5 nm or more and about 50 nm or less. As a result, the function as the auxiliary electrode can be reliably imparted to the first auxiliary electrode 15 and the second auxiliary electrode 16.

The total thickness of the electrochromic sheet 150 having such a configuration as described above is not particularly limited; however, it is preferably 0.3 mm or more and 10.0 mm or less, and more preferably 0.5 mm or more and 5.0 mm or less. As a result, in a case where the electrochromic sheet 150 is molded into the curved sheet 120 having a curved shape, it is possible to impart excellent thermoformability to the electrochromic sheet 150 while imparting excellent strength to the electrochromic sheet 150.

<Curved sheet>

The curved sheet 120 is composed of the electrochromic sheet 150 that is formed to have a curved shape by being joined onto the outer surface of the resin layer 35, that is, onto the curved convex surface 36, such that the curved sheet 120 has a curved shape in accordance with the shape of the outer surface of the resin layer 35, that is, the curved convex surface 36. Since the lens 30 includes the curved sheet 120, the function by which the color development and decoloration at any timing are carried out reversibly by carrying out switching of the application of the voltage to the electrochromic element 60 included in the electrochromic sheet 150 is imparted to the sunglasses 300. In this way, the curved sheet 120 is configured to have the electrochromic sheet 150 that is formed to have a curved shape.

### <Manufacturing method for lens>

In the sunglasses 300 (glasses) having such a configuration as described above, the lens 30 provided in the sunglasses 300 is manufactured, for example, through a manufacturing method for the lens 30 as described below.

Hereinafter, each step of the manufacturing method for the lens 30 including the curved sheet 120 in which the electrochromic sheet 150 according to the present invention is formed to have a curved shape will be described in detail.

A manufacturing method for the electrochromic sheet 150 (curved sheet 120) will be described, and then the manufacturing method for the lens 30 including the curved sheet 120 will be described.

### <Manufacturing method for electrochromic sheet (curved sheet)>

### Sheet preparation step:

The element sealing and connecting sheet 110 that has the first substrate 11, the second substrate 12, the sealing part 55, and the electrochromic element 60, where a plurality of electrochromic elements 60 provided in correspondence to the colored regions 70 partitioned by the sealing part 55 are sandwiched between the first substrate 11 and the second substrate 12, is prepared. In the element sealing and connecting sheet 110, the plurality of electrochromic elements 60 are connected to each other through the sealing part 55 between the first substrate 11 and the second substrate 12, and they are sealed by the first substrate 11, the second substrate 12, and the sealing part 55.

### Step of disposing protective film:

The protective film 50 (masking tape) is attached to both surfaces of the element sealing and connecting sheet 110 obtained in the sheet preparation step, thereby obtaining a connecting sheet laminate 210 in which the protective film 50 is attached to both surfaces of the element sealing and connecting sheet 110 (see Fig. 6(a)).

### Sheet individualization step:

Next, as shown in Fig. 6(b), in a state of the prepared connecting sheet laminate 210, that is, in a state where the protective film 50 is attached to both surfaces of the element sealing and connecting sheet 110, the element sealing and connecting sheet 110 is punched out in the thickness direction in correspondence to each electrochromic element 60 to obtain an element laminate 250 in which the connecting sheet laminate 210 is individualized. That is, the electrochromic sheet 150, which is individualized in correspondence to each electrochromic element 60 in a state where the protective film 50 is attached to both surfaces, is obtained (see Fig. 7 and Fig. 8).

The individualized electrochromic sheets 150 integrally have the EC sheet main body 151 having a substantially rectangular shape when seen in a plan view, and notches 137 that are protruded in a peripheral outward direction from a plurality of outer edge places of the EC sheet main body 151. That is, a shape for forming the notch 137 is provided in the metal mold for punching out.

As the shape of the EC sheet main body 151, various shapes such as a rectangular shape, a circular shape, and an elliptical shape can be employed. The shape to be employed can be appropriately selected; however, in a case of considering a shape to be trimmed in a case of obtaining the final lens 30 and an effective utilization rate in a case of carrying out individualization from the element sealing and connecting sheet 110 described above, it is preferable to employ a substantially rectangular shape that is laterally long when seen in a plan view.

In the present embodiment, the shape of the electrochromic sheet 150 (EC sheet main body 151) is, for example, as shown in Fig. 7, a laterally long shape in which the upper side and the lower side having a circular shape when seen in a plan view are removed, and specifically, the shape is such that an upper side 155 and a lower side 156 are linear long sides, and a right side 157 and a left side 158 are curved short sides.

### Sheet curving treatment step:

Next, as shown in Fig. 6(c), the element laminate 250 that has been subjected to the individualization in the sheet individualization step is subjected to thermal bending processing under heating to form a curved element laminate 220 having a curved shape in which one surface side of the element laminate 250 is the curved concave surface and the other surface side thereof is a curved convex surface. As a result, the electrochromic sheet 150 having a flat plate shape can be formed into the curved sheet 120 having a curved shape in a state where the protective films 50 are attached to both surfaces.

This thermal bending processing is usually carried out by press molding or vacuum molding.

In this case, as described later, the heating temperature (molding temperature) of the element laminate 250 (electrochromic sheet 150) in the present embodiment is preferably set to about 110°C or more and about 170°C or less and more preferably set to about 130°C or more and about 160°C or less in consideration of the melting or softening temperature of the first and second substrates 11 and 12, where the electrochromic sheet 150 includes the substrates 11 and 12. In a case of setting the heating temperature within such a range, the electrochromic sheet 150 can be reliably subjected to thermal bending to form the curved sheet 120 having a curved shape while preventing the electrochromic sheet 150 from being modified or deteriorated and allowing the electrochromic sheet 150 to be in a softened or molten state.

It is noted that in a case where it is not necessary to process the electrochromic sheet 150 into the curved sheet 120, that is, in a case where the sheet curving treatment is carried out at the provision destination of the electrochromic sheet 150, the planar sheet-shaped electrochromic sheet 150 is naturally provided to the provision destination.

### Protective film removing step:

The protective film 50 is peeled off from the curved sheet 120 which has been subjected to thermal bending in the sheet curving treatment step.

### Resin layer molding step:

Subsequently, as shown in Fig. 6(d), the curved sheet 120 is disposed in the metal mold 40 including a curved concave surface that is formed to have a curved shape. Specifically, as shown in Figs. 12(a) and 12(b), a curved concave surface 42a of the lower mold 42 of the metal mold 40 is allowed to abut on a curved convex surface 121 of the curved sheet 120. The notch 137 of the curved sheet 120 described above and a positioning recess part 47 of the lower mold 42 are provided as the positioning structure 80 for appropriately disposing the curved sheet 120 in the metal mold 40.

The notch 137 of the curved sheet 120 is fitted to the positioning recess part 47 provided in the lower mold 42, which makes it possible to appropriately carry out the positioning of the curved sheet 120. It is noted that in the positioning recess part 47, it is preferable to increase the depth of the positioning recess part 47 so that the disposition of the disposed notch 137 is easy and the notch 137 is difficult to move after the disposition. In that case, since the positioning recess part 47 is filled with a resin material, the notch 37 is also formed in the lens 30 before trimming. Since the notch 37 is provided in the lens 30, the positioning recess part 47 serves as an escape path for the injected resin, and the shear stress is dispersed, which makes it possible to reduce damage (for example, cracking and the like) to the curved sheet 120.

The upper mold 41 is attached in a state where the curved sheet 120 is adsorbed to the lower mold 42, and by using, for example, an insert injection molding method, the resin layer 35 composed of a resin material as a main material is molded in the cavity 43 which is a space formed by the lower mold 42 and the upper mold 41.

That is, the constituent material (lens resin material 34) of the resin layer 35 in a molten state is cooled and solidified in a state of being brought into contact with the curved concave surface of the curved sheet 120, whereby the resin layer 35 is molded in a state of being brought into direct contact with the curved concave surface 122 of the curved sheet 120 without interposing an adhesive layer or the like.

As a result, the lens 30 which includes the curved sheet 120 which has been subjected to thermal bending and the resin layer 35 is manufactured.

In a case of subjecting the resin layer 35 to injection molding, the heating temperature (molding temperature) of the constituent material of the resin layer 35 for obtaining a molten state is appropriately set according to the kind of the constituent material of the resin layer 35. However, in a case where the constituent material of the resin layer 35 is the same as or identical to the constituent material of the first substrate 11 provided in the curved sheet 120 described later, the heating temperature is preferably set to about 180°C or more and about 320°C or less, and more preferably set to about 230°C or more and about 300°C or less. In a case of setting the heating temperature within such a range, the constituent material of the resin layer 35 in the molten state can be reliably supplied to the curved concave surface 122 of the curved sheet 120.

In addition, an injection compression molding method is preferably used among the insert injection molding methods. The injection compression molding method is preferably used since the optical anisotropy due to the molding distortion or the local alignment of the resin molecules during molding is unlikely to occur in the resin layer 35 as a molded body and the lens 30, because the injection compression molding method adopts a method of injecting a resin material for forming the resin layer 35 into the metal mold 40 at a low pressure and then closing the metal mold 40 at a high pressure to apply a compressive force to the resin material. In addition, by controlling the metal mold compressive force that is uniformly applied to the resin material, the resin material can be cooled at a constant specific volume, and thus the resin layer 35 having high dimensional accuracy can be obtained.

In addition, in a case where the lens resin material 34 is injected into and compressed in the cavity 43, the curved sheet 120 is maintained to be appropriately disposed without causing a positional deviation, distortion, or the like by the positioning structure 80 (the positioning recess part 47 and the notch 137), and thus the curved sheet 120 is laminated on the curved convex surface 36 of the resin layer 35. As a result, the lens 30 with the curved sheet 120, which has high dimensional accuracy and high quality, is obtained.

It is noted that in the present embodiment, the position of the notch 137 of the curved sheet 120 is provided at a position (right side 157 and left side 158) orthogonal to the flow direction of the lens resin material 34 in a case where the notch 137 is disposed in the cavity 43. With such a disposition, the curved sheet 120 is less likely to be deviated in a case where the lens resin material 34 is injected into the cavity 43.

### Trimming step:

The manufactured lens 30 is subjected to trimming processing of cutting an edge part thereof as shown in Fig. 9, whereby the lens 30 is obtained as a cutout of which the shape matches the shape of the inner side of the rim part 21.

### Lens mounting step:

Then, the lens 30 (cutout) is mounted on the inner side of the rim part 21 to obtain the sunglasses 300.

### <Fourth embodiment>

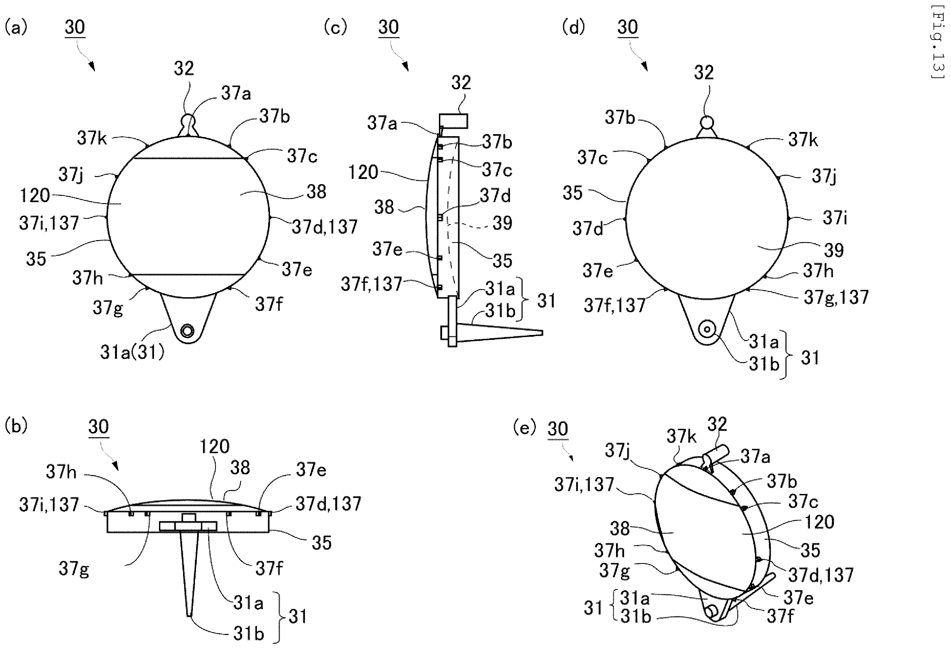

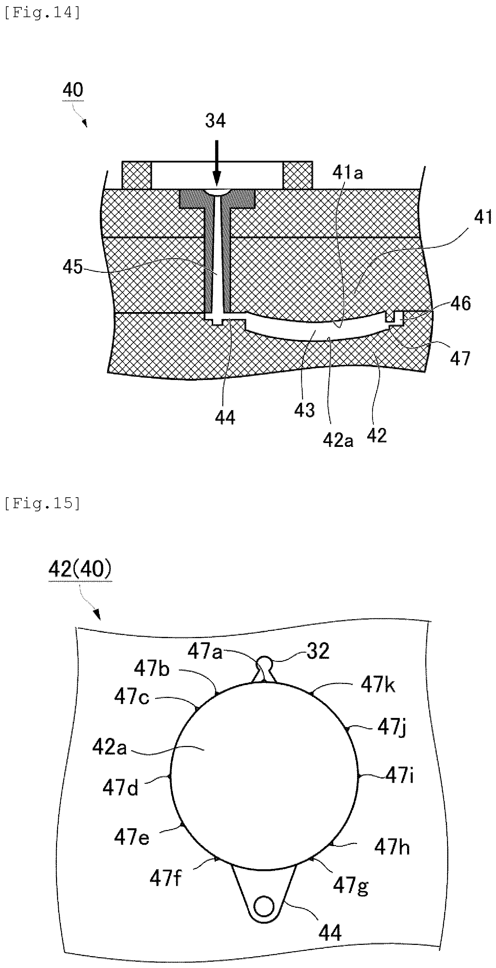

The lens 30 immediately after injection molding and the metal mold 40 (only the main portion is shown) used for injection molding will be specifically described with reference to Figs. 13(a) to 13(e) and Fig. 15. Figs. 13(a) to 13(e) is a view showing the lens 30 and shows a state before the removal of the surplus portions (first and second trimming resin parts 31 and 32) during molding. Fig. 13(a) is a plan view, Fig. 13(b) is a front view, Fig. 13(c) is a side view, Fig. 13(d) is a bottom view, and Fig. 13€ is a perspective view. Fig. 14 is a cross-sectional view of the metal mold 40 that is used for injection molding. Fig. 15 is an enlarged view showing a surface of the lower mold 42 on which the curved concave surface 42a is provided.

The lens 30 includes the resin layer 35 that is a lens main body and the curved sheet 120 that is provided on the lens convex surface 38. It is noted that the present example shows a case of a state before the surplus portion is removed, and the first trimming resin part 31 and the second trimming resin part 32, which are provided on the outside of an outer peripheral surface of the resin layer 35, are provided.

The first and second trimming resin parts 31 and 32 are portions that are removed by a trimming treatment after molding, and the first trimming resin part 31 is provided on a gate side. The second trimming resin part 32 is provided at positions facing each other on a side opposite to the first trimming resin part 31 and functions as a resin pool.

As shown in the drawing, the first trimming resin part 31 has a runner resin part 31a formed in a runner 45 of the metal mold 40 and a gate resin part 31b formed in a gate 44. The boundary between the gate resin part 31b and the resin layer 35 is cut during the trimming treatment.

The outer diameter of the resin layer 35 in a case of being viewed in a top view, which is the lens main body, is, for example, 75 mm.

The thickness of the central portion of the lens main body is, for example, 10 mm.

A plurality of notches (here, first to eleventh notches 37a to 37k) are provided on an outer peripheral surface of the resin layer 35 which is the lens main body, where the outer peripheral surface is in a vicinity of an outer peripheral boundary with the lens convex surface 38.

In a case of being viewed in a top view, the notch 137 of the curved sheet 120 is provided to overlap with a fourth notch 37d provided at a position of 3 o'clock in the circumferential direction clockwise and a ninth notch 37i provided at a position of 9 o'clock in the circumferential direction clockwise.

A step of subjecting the lens 30 having the above-described configuration to injection molding will be described with reference to the metal mold 40 of Fig. 14 and Fig. 15. Fig. 14 is a cross-sectional view of the metal mold 40, which is shown focused on the cavity 43. Fig. 15 shows a curved concave surface 42a of the lower mold 42.

The curved concave surface 42a of the lower mold 42 of the metal mold 40 and the curved convex surface 121 of the curved sheet 120 are closely attached to each other. A plurality of positioning recess parts (first to eleventh positioning recess parts 47a to 47k) are provided at positions corresponding to the above-described notches 37 (first to eleventh notches 37a to 37k) on the outer peripheral edge of the curved concave surface 42a. In a case where the curved sheet 120 is closely attached to the curved concave surface 42a, the notches 137 of the curved sheet 120 are fitted to the positioning recess parts 47 provided in the lower mold 42 in correspondence to the positioning recess parts (first to eleventh positioning recess parts 47a to 47k) corresponding to the notches 137 of the curved sheet 120, whereby the curved sheet 120 is appropriately positioned.

In the present embodiment, in Fig. 15, the ninth positioning recess part 47i at a position of 3 o'clock in the circumferential direction clockwise and the fourth positioning recess part 47d at a position of 9 o'clock in the circumferential direction clockwise are selected, and the notch 137 of the curved sheet 120 is fitted thereto. By providing a plurality of positioning recess parts (first to eleventh positioning recess parts 47a to 47k) in advance, it is possible to handle various kinds of the curved sheet 120 according to the position of the notch 137 of the curved sheet 120.

The metal mold 40 is assembled in a state where the curved sheet 120 is closely attached to the curved concave surface 42a, and the cavity 43 is filled with the lens resin material 34 through the runner 45 and the gate 44. The lens 30 is taken out from the metal mold 40, and then the lens 30 is obtained as a molded product having the first and second trimming resin parts 31 as shown in Fig. 13. Finally, the first and second trimming resin parts 31 are removed, and then a finished product of the lens 30 on which the curved sheet 120 is laminated on the surface is obtained.

As described above, the present embodiment has been described above. However, the present invention is not limited thereto.

For example, each layer that constitutes the electrochromic element 60 provided in the electrochromic sheet 150 can be replaced with a layer having any configuration that makes it possible to exhibit the same function. In addition, the electrochromic sheet 150 may further include another layer such as an interlayer between the first substrate 11 and the electrochromic element 60 and between the second substrate 12 and the electrochromic element 60.

Although the electrochromic sheet 150 is exemplified as a sheet member laminated on the lens 30, the present invention is not limited thereto, and for example the electrochromic sheet 150 can also be applied to a polarizing sheet for a polarizing lens.

In addition, although a combination of the notch 137 of the electrochromic sheet 150 and the positioning recess part 47 of the metal mold 40 has been exemplified as the positioning structure 80, the present invention is not limited thereto. For example, a form in which the positioning recess part 47 of the metal mold 40 is omitted, a mark is provided at a portion where the positioning recess part 47 has been removed, and the notch 137 is aligned with the mark may be adopted. In this case, the function of preventing positional deviation in a case of injecting the lens resin material 34 is not provided.

In addition, although a combination of the notch 137 having a protruding shape and the positioning recess part 47 having a recessed shape has been exemplified as the positioning structure 80, the present invention is not limited thereto, and the positioning structure 80 may be a positioning structure in which a recessed shape is provided on the electrochromic sheet 150 and a protruding shape is provided on the metal mold 40.

Hereinabove, the embodiments of the present invention have been described with reference to the drawings. However, the embodiment is merely an example of the present invention, and various configurations other than the above-described configurations can also be adopted.

An example of a reference form according to the present invention is shown below.

### <Reference Form 1>

According to Reference Form 1, the color development or decoloration performance of the electrochromic sheet can be improved by using an absorbance of an electrochromic layer as an indicator and controlling the absorbance thereof.
[1] An electrochromic sheet including:
   a laminate including
   a support layer,
   an electrode layer provided on the support layer, and
   an electrochromic layer provided on the electrode layer;
   an electrolyte layer provided on a surface of the laminate on a side of the electrochromic layer; and
   a sealing part provided to cover at least a side surface of the electrolyte layer,
   in which the electrochromic layer contains a metal nanoparticle and an electrochromic material supported on the metal nanoparticle, and is configured to satisfy the following condition,
   Condition: in a case where an absorbance of the laminate at a wavelength of 320 nm is denoted by α and an absorbance of the laminate A at a wavelength of 295 nm is denoted by β, (β - α) ≥ 0.8 is satisfied.
[2] The electrochromic sheet according to [1],
   in which the metal nanoparticle is one or two or more selected from tin oxide, titanium oxide, zinc oxide, antimony (V) oxide, zirconium oxide, and yttrium oxide.
[3] The electrochromic sheet according to [1] or [2],
   in which an average primary particle diameter of the metal nanoparticles is 1 nm to 100 nm.
[4] The electrochromic sheet according to any one of [1] to [3],
   in which the electrochromic material of the electrochromic layer has a reductive color developability.
[5] The electrochromic sheet according to any one of [1] to [4],
   in which the sealing part is formed of a sealing material containing a curable resin.
[6] The electrochromic sheet according to [5],
   in which the curable resin has at least one selected from an ultraviolet reactive functional group or a thermal reactive functional group.
[7] The electrochromic sheet according to any one of [1] to [6],
   in which the support layer contains one or two or more selected from an episulfide-based resin, a thiourethane-based resin, a methacrylate-based resin, a polycarbonate-based resin, a urethane-based resin, a polyamide-based resin, a polyester-based resin, and a cellulose-based resin.
[8] The electrochromic sheet according to any one of [1] to [7],
   in which the electrolyte layer is a solid or a gel.
[9] The electrochromic sheet according to any one of [1] to [8],
   in which the electrochromic layer is provided on each of upper and lower surfaces of the electrolyte layer.
[10] The electrochromic sheet according to any one of [1] to [9],
   in which the electrochromic sheet further includes an electrode layer between the support layer and the electrochromic layer.
[11] An electrochromic device that is obtained by using the electrochromic sheet according to any one of [1] to [10].

### <Reference Form 2>

According to Reference Form 2, a sealing material capable of improving the adhesiveness of the sealing part in the electrochromic sheet can be obtained.
[1] A sealing material that constitutes the sealing part of the electrochromic sheet including
   an electrolyte layer,
   a sealing part provided to cover a side surface of the electrolyte layer, and
   an electrochromic layer provided on at least one surface of the electrolyte layer,
   in which the sealing material has a viscosity (25°C) of 800 Pa·s or more at a shear rate of 0.1/s and has a viscosity (25°C) of 200 Pa·s or less at a shear rate of 10/s.
[2] The sealing material according to [1],
   in which the sealing material includes a curable resin.
[3] The sealing material according to [2],
   in which the curable resin has at least one selected from an ultraviolet reactive functional group or a thermal reactive functional group.
[4] The sealing material according to any one of [1] to [3],
   in which the sealing material includes inorganic particles.
[5] The sealing material according to any one of [1] to [4],
   in which the electrolyte layer of the electrochromic sheet is a solid or a gel.
[6] The sealing material according to any one of [1] to [5],
   in which the electrochromic layer is provided on each of upper and lower surfaces of the electrolyte layer of the electrochromic sheet.
[7] The sealing material according to any one of [1] to [6],
   in which the sealing part integrally covers a side surface of the electrolyte layer and a side surface of the electrochromic layer.
[8] An electrochromic sheet that is obtained by using the sealing material according to any one of [1] to [7].
[9] An electrochromic device that is obtained by using the electrochromic sheet according to [8].

### <Reference Form 3>

According to Reference Form 3, by using the light transmittance of the support layer at a wavelength of 380 nm as an indicator and setting the light transmittance to 10% or less, ultraviolet rays on a short wavelength side with respect to blue light can be effectively reduced, and the light resistance of the electrochromic sheet can be improved.
[1] An electrochromic sheet including:
   a support layer;
   an electrolyte layer provided on the support layer;
   an electrochromic layer provided on at least one surface of the electrolyte layer;
   a sealing part provided to cover at least a side surface of the electrolyte layer,
   in which the support layer has a light transmittance of 10% or less at a wavelength of 380 nm.
[2] The electrochromic sheet according to [1],
   in which the support layer has a light transmittance of 80% or more at a wavelength of 430 nm.
[3] The electrochromic sheet according to [1] or [2],
   in which the support layer contains an ultraviolet absorbing agent.
[4] The electrochromic sheet according to any one of [1] to [3],
   in which the support layer contains one or two or more selected from an episulfide-based resin, a thiourethane-based resin, an acrylic resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.
[5] The electrochromic sheet according to any one of [1] to [4],
   in which the sealing part is formed of a sealing material containing a thermosetting resin.
[6] The electrochromic sheet according to [5],
   in which the thermosetting resin contains one or two or more selected from an epoxy resin, an acrylic resin, a phenol resin, a maleimide resin, a silicone resin, a urethane resin, a cyanate resin, a melamine resin, a urea resin, and an unsaturated polyester resin.
[7] The electrochromic sheet according to any one of [1] to [6],
   in which the electrolyte layer of the electrochromic sheet is a solid or a gel.
[8] The electrochromic sheet according to any one of [1] to [7],
   in which the electrochromic layer is provided on each of upper and lower surfaces of the electrolyte layer of the electrochromic sheet.
[9] The electrochromic sheet according to any one of [1] to [8],
   in which the electrochromic sheet further includes an electrode layer between the support layer and the electrochromic layer.
[10] An electrochromic device that is obtained by using the electrochromic sheet according to any one of [1] to [9].

### <Reference Form 4>

According to Reference Form 4, the adhesiveness between the columnar electrode and the sealing part can be improved by using a metal paste and a liquid sealing material in combination.
[1] A manufacturing method for an electrochromic sheet including
   an electrolyte layer,
   an electrochromic layer provided on at least one surface of the electrolyte layer,
   a sealing part provided to cover side surfaces of the electrolyte layer and the electrochromic layer, and
   a columnar conductive part that penetrates the sealing part in a thickness direction and is electrically connected to the electrolyte layer, the manufacturing method including:
      a step of disposing at least one of the electrolyte layer or the electrochromic layer on a substrate;
      a step of applying a conductive paste onto the substrate in a region that does not overlap with the electrolyte layer and/or the electrochromic layer when seen in a plan view, and applying a liquid sealing material onto the substrate to surround an outer periphery of the electrolyte layer and/or an outer periphery of the electrochromic layer and an outer periphery of the conductive paste;
      a step of curing the sealing material to form the sealing part; and
      a step of curing the conductive paste to form the columnar conductive part.
[2] The manufacturing method for an electrochromic sheet according to [1],
   in which the electrochromic sheet further includes an electrode layer, and
   in the step of disposing the electrolyte layer on the substrate, the electrode layer is disposed on the substrate,
   the electrolyte layer is disposed on the electrode layer, and the conductive paste is applied onto a region on a surface of the electrode layer, which does not overlap with the electrolyte layer, whereby the electrolyte layer and the columnar conductive part are electrically connected through the electrode layer.
[3] The manufacturing method for an electrochromic sheet according to [1] or [2],
   in which the conductive paste contains one or two or more selected from metal powders of gold, silver, copper, platinum, nickel, palladium, and alloys thereof, as well as a conductive carbon filler.
[4] The manufacturing method for an electrochromic sheet according to any one of [1] to [3],
   in which the sealing material has a viscosity (25°C) of 500 Pa·s or less at a shear rate of 10/s.
[5] The manufacturing method for an electrochromic sheet according to any one of [1] to [4],
   in which the electrochromic sheet is sandwiched between a pair of supports, and
   in the step of forming the sealing part,
   the pair of supports are bonded to press and spread the sealing material, thereby forming the sealing part covering side surfaces of the electrolyte layer and the electrochromic layer.
[6] The manufacturing method for an electrochromic sheet according to any one of [1] to [5],
   in which the electrolyte layer of the electrochromic sheet is a solid or a gel.
[7] The manufacturing method for an electrochromic sheet according to any one of [1] to [6],
   in which the electrochromic layer is provided on each of upper and lower surfaces of the electrolyte layer of the electrochromic sheet.
[8] The manufacturing method for an electrochromic sheet according to any one of [1] to [7],
   in which the sealing material includes a curable resin.
[9] A manufacturing method for an electrochromic device, including:
   a step of processing the electrochromic sheet obtained by the manufacturing method for an electrochromic sheet according to any one of [1] to [8].

### <Reference Form 5>

According to Reference Form 5, in a lens in which a sheet member is laminated on the surface, the sheet member can be appropriately laminated on the lens surface.
[1] A lens manufacturing method for manufacturing a lens 30 by injecting a lens resin material 34 into a metal mold 40 to fill the metal mold 40, the lens manufacturing method including:
   a step of disposing a sheet member (curved sheet 120) laminated on a surface (lens convex surface 38) of the lens 30 (lens main body) in a cavity 43 of the metal mold 40; and
   a step of injecting the lens resin material 34 into the cavity 43 in which the sheet member (curved sheet 120) is disposed, thereby filling the cavity 43,
   in which the sheet member (curved sheet 120) and the cavity 43 include a positioning structure 80 (notch 137, positioning recess part 47) for aligning a position of the sheet member (curved sheet 120) in the cavity 43.
[2] The lens manufacturing method according to [1],
   in which the positioning structure 80 has a protruding part (notch 137) that protrudes in an outer peripheral direction of the sheet member (curved sheet 120) and a recess part (positioning recess part 47) to which the protruding part (notch 137) is fitted in the cavity 43.
[3] The lens manufacturing method according to [1] or [2],
   in which a portion where the sheet member (curved sheet 120) is laminated on the lens 30 (curved convex surface 36) is formed to have a curved surface.
[4] The lens manufacturing method according to [2] or [3],
   in which the sheet member (curved sheet 120) has a substantially rectangular shape, and
   the protruding part (notch 137) is provided on each of sides facing each other (right side 157 and left side 158) in the substantially rectangular shape.
[5] The lens manufacturing method according to [4],
   in which the protruding part (notch 137) is provided on short sides (right side 157 and left side 158) of the substantially rectangular shape.
[6] The lens manufacturing method according to [5],
   in which one protruding part (notch 137) is provided at each of positions facing each other in the short sides (right side 157 and left side 158).
[7] The lens manufacturing method according to any one of [2] to [6],
   in which the protruding part (notch 137) is provided at a position orthogonal to a flow direction of the lens resin material 34 in the cavity 43.
[8] The lens manufacturing method according to any one of [1] to [7],
   in which the lens resin material 34 is a polycarbonate resin.
[9] The lens manufacturing method according to any one of [1] to [8],
   in which the sheet member (curved sheet 120) is an electronic light control sheet (electrochromic sheet) that is capable of reversibly controlling color development and decoloration by electricity.
[10] A lens manufactured by the lens manufacturing method according to any one of [1] to [9], the lens including:
   a sheet member (curved sheet 120) on a surface (curved convex surface 36).
[11] A sheet member (curved sheet 120) that is disposed in a metal mold 40 for injection molding and is laminated on a lens surface (curved convex surface 36) in a case where a lens 30 is manufactured by injection molding, the sheet member (curved sheet 120 or electrochromic sheet 150) including:
   a positioning structure 80 that is used for positioning in the metal mold 40 in a case where the sheet member is disposed in the metal mold 40.
[12] The sheet member (curved sheet 120 or electrochromic sheet 150) according to [11],
   in which the positioning structure 80 has a protruding part (notch 137) that protrudes in an outer peripheral direction of the sheet member (curved sheet 120), and
   the protruding part (notch 137) is fitted to a positioning structure (positioning recess part 47) provided in the metal mold 40.
[13] The sheet member (curved sheet 120) according to [11] or [12],
   in which a portion to be laminated on the lens 30 is formed in a curved surface.
[14] The sheet member according to [12],
   in which the sheet member (curved sheet 120 or electrochromic sheet 150) has a substantially rectangular shape, and
   the protruding part (notch 137) is provided on each of opposite sides (right side 157 and left side 158) of the substantially rectangular shape.
[15] The sheet member according to [14],
   in which the protruding part (notch 137) is provided on a short side (right side 157 or left side 158) of the substantially rectangular shape.
[16] The sheet member according to [15],
   in which one protruding part (notch 137) is provided at each of positions facing each other in the short sides (right side 157 and left side 158).
[17] The sheet member according to any one of [11] to [16],
   in which the protruding part (notch 137) is provided at a position orthogonal to a flow direction of the lens resin material 34 in the cavity 43 of the metal mold 40.
[18] The sheet member according to any one of [11] to [17],
   in which the sheet member (curved sheet 120 or electrochromic sheet 150) is an electronic light control sheet (electrochromic sheet 150) that is capable of reversibly controlling color development and decoloration by electricity. Examples

Hereinafter, the present invention will be described in detail with reference to examples. However, the content of the present invention is not limited to the examples.

### <Experiment 1>

### (1) Production of gel electrolyte

The following materials were prepared.
· Binder resin 1; urethane acrylate (product name: UXF4002, manufactured by Nippon Kayaku Co., Ltd.)
· Binder resin 2: crosslinked substance of polymer having polymethyl methacrylate (PMMA) chain (product name: AA-6, manufactured by Toagosei Co., Ltd.)
· Ionic liquid 1; (EMIMFSI, ethylmethylimidazolium bisfluorosulfonimide, Kanto Chemical Co., Inc.)

### <Example 1-1>

A solution obtained by mixing the binder resin 1, the binder resin 2, and the ionic liquid 1 at the ratios shown in Table 1 and further mixing the resultant mixture with 0.5% by mass of a photopolymerization initiator (Irgacure 184, manufactured by Nippon Kayaku Co., Ltd.) with respect to the total amount of the binder resins 1 and 2 was applied onto a surface of a PET film (NP75C, manufactured by PANAC Co., Ltd.) that had been subjected to a release treatment, a PET film (NP75A, manufactured by PANAC CO., LTD.) that had been subjected to a release treatment was bonded to the above-described PET film, and curing was carried out with ultraviolet rays (UV) to produce a gel electrolyte.

### <Comparative Example 1-1>

A gel electrolyte was produced in the same manner as in Example 1-1, except that the contents of the binder resins 1 and 2 and the ionic liquid 1 were changed to the ratios shown in Table 1.

### [Table 1]

**Table 1**

| | Gel electrolyte (parts by mass) | | |
|---|---|---|---|
| | Binder resin 1 | Binder resin 2 | Ionic liquid 1 |
| Example 1-1 | 23 | 7 | 70 |
| Comparative Example 1-1 | 13 | 7 | 80 |

### (2) Production of electrochromic sheet

Such an electrochromic sheet as shown in Fig. 1 was produced according to the following procedure.

### - Formation of primary electrode -

A polycarbonate resin substrate (POLYCA ACE, deflection temperature under loading: 140°C, manufactured by Sumitomo Bakelite Co., Ltd.) having a thickness of 0.5 mm was prepared as the first support.

On the first support, an ITO film was formed to have a thickness of about 100 nm by a sputtering method, thereby forming a primary electrode.

3 g of titanium oxide (manufactured by ISHIHARA SANGYO KAISHA, LTD., ST-21), 0.2 g of acetylacetone, and 0.3 g of a surfactant (manufactured by FUJIFILM Wako Pure Chemical Corporation, polyoxyethylene octylphenyl ether) were subjected to a beads mill treatment together with 5.5 g of water and 1.0 g of ethanol for 12 hours.

1.2 g of polyethylene glycol (#20,000, manufactured by NOF Corporation) was added to the obtained dispersion liquid to produce a paste.

The obtained paste was applied onto the primary electrode by a screen printing method so that the thickness was 2 µm, dried at 80°C, and then subjected to a UV ozone treatment at 90°C for 20 minutes to form an electron transport layer consisting of a porous titanium oxide particle film.

### - Formation of first electrochromic layer -

Subsequently, a solution of 2,2,3,3-tetrafluoropropanol, containing 1.5% by mass of an electrochromic compound I which has reductive color developability and is represented by the chemical formula (EC1), was applied by a spin coating method, and then subjected to an annealing treatment at 80°C for 10 minutes to be supported (adsorbed) on the above-described porous titanium oxide particle film, thereby forming a first electrochromic layer.

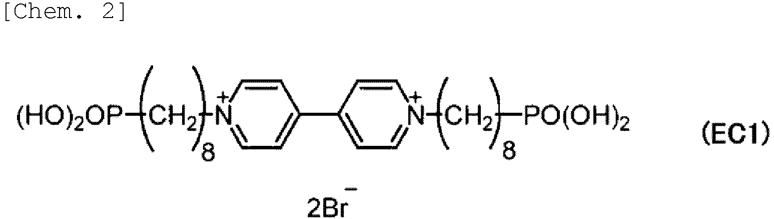

### - Formation of secondary electrode -

A polycarbonate resin substrate having the same shape and the same thickness as those of the first support described above was prepared as the second support. An ITO film was formed on the second support by a sputtering method to have a thickness of about 100 nm, thereby forming a secondary electrode.

### - Formation of second electrochromic layer -

A solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by Formula (EC2), and 2-butanone at a mass ratio (57:3:140:800) was prepared on the ITO film which was the secondary electrode. Then, the prepared solution was applied onto an ITO glass substrate by a spin coating method.

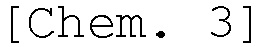

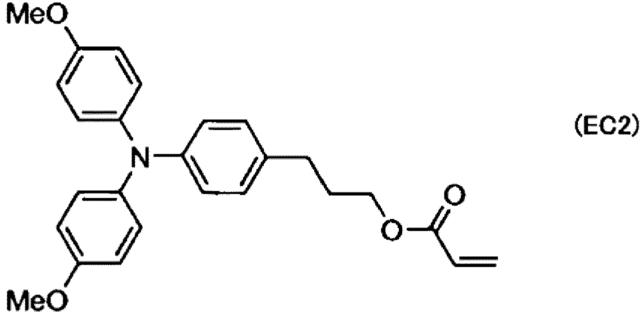

(In the formula, Me represents a methyl group)

Next, UV curing was carried out under a nitrogen atmosphere through a quartz substrate having a pattern of a Cr layer, and then a patterned second electrochromic layer having a thickness of 1.2 µm, which contained a compound represented by the radically polymerizable compound II, was selectively formed on the secondary electrode.

### - Bonding process -

The release film was peeled off from each gel electrolyte produced in (1) described above, and the gel electrolyte was subjected to a bonding treatment on the surface of the first electrochromic layer.

Subsequently, the prepared sealing material (epoxyacrylate resin ("PHOTOREC S-WF17", manufactured by SEKISUI MATERIAL SOLUTIONS CO., LTD.) was applied by a dispenser method to surround the periphery of the side surface of the first electrochromic layer.

Thereafter, the surface of the second electrochromic layer on the second support and the surface of the gel electrolyte were bonded to each other, the sealing material was pressed and spread to cover the side surfaces of the first electrochromic layer and the second electrochromic layer with the sealing material, irradiation was carried out with ultraviolet rays at 3 J/cm² (temporary curing), a heat curing treatment (main curing) was carried out at 100°C for 1 hour, the sealing material was cured to form a sealing part, and an electrochromic sheet was produced.

### (3) Measurement and evaluation

Next, the obtained electrochromic sheet in Example 1-1 was subjected to the following measurement and evaluation. The results are shown in Table 2.

### · Measurement of amount of deformation

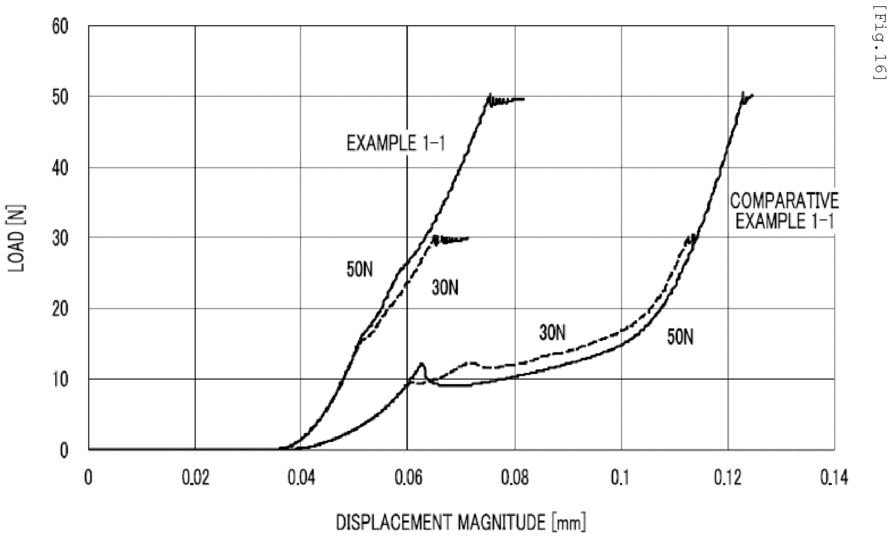

The amount of deformation was measured according to the following procedures i and ii. In addition, Fig. 16 shows a displacement-load curve in which the horizontal axis indicates the displacement magnitude (mm) and the vertical axis indicates the load (N).

Procedure i: A test piece (60 × 80 mm; elliptical shape) in which the electrolyte layer was located at a central part and the sealing part was located at an outer edge was produced by using the electrochromic sheet, the test piece was chucked at both ends by a chucking part, the central part of the test piece was pressed at 30 N for 30 seconds, and a difference in depth between the central part of the test piece before being pressed and the central part of the test piece after being pressed was defined as a variation amount (mm).

Procedure ii: A test piece (60 × 80 mm; elliptical shape) in which the electrolyte layer was located at a central part and the sealing part was located at an outer edge was produced by using the electrochromic sheet, the test piece was chucked at both ends by a chucking part, the central part of the test piece was pressed at 50 N for 30 seconds, and a difference in depth between the central part of the test piece before being pressed and the central part of the test piece after being pressed was defined as a variation amount (mm).

In any of the procedures, a rigid ball indentation test was carried out using a measuring instrument Tensilon RTF-2430 (manufactured by ORIENTEC CO., LTD.), where the test was carried out under the conditions of a rigid ball diameter of 30 mmφ, a load speed of 0.1 mm/min (crosshead speed), a creep load of 30 N or 50 N, a creep time of 30 seconds, and room temperature.

### (4) Evaluation

The processability of the obtained electrochromic sheet was evaluated. The results are listed in Table 2.

### · Processability

The outer periphery of the electrochromic sheet was subjected to cutting processing in a state where the central part of the electrochromic sheet was chucked. After that, the presence or absence of the chuck marks was evaluated according to the following criteria. The fact that the chuck marks are not observed is intended to mean that the processability of the electrochromic sheet is favorable.

### [Evaluation criteria]

OK: No chuck marks were observed.
NG: Chuck marks were observed.

### [Table 2]

**Table 2**

| | | Example 1-1 | Comparative Example 1-1 |
|---|---|---|---|
| Displacement magnitude after 30 seconds at 30 N | [mm] | 0.07 | 0.11 |
| Displacement magnitude after 30 seconds at 50 N | [mm] | 0.08 | 0.12 |
| Yield point | [N] | >50 | 10 |
| Processability | - | OK | NG |

### <Experiment 2>

### (1) Measurement of absorbance

Using an ultraviolet-visible-near infrared spectrophotometer (manufactured by JASCO Corporation, V-670), (β - α) was calculated where the absorbance of the laminate A at a wavelength of 320 nm was denoted as α, an absorbance of the laminate A at a wavelength of 295 nm was denoted as β. A plurality of laminates A were prepared, and the value of (β - α) was obtained as an average value. It is noted that the value of α was 1 or less.

### <Example 2-1>

### (2) Production of electrochromic sheet

### - Formation of secondary electrode -

A polycarbonate resin substrate (POLYCA ACE, deflection temperature under loading: 140°C, manufactured by Sumitomo Bakelite Co., Ltd.) having a thickness of 0.5 mm was prepared as the second support.

An ITO film was formed on the second support by a sputtering method to have a thickness of about 100 nm, thereby forming a secondary electrode.

### - Formation of second electrochromic layer -

5.50 g of a tin oxide sol solution (manufactured by Nissan Chemical Corporation, CELNAX CX-S510M), 1.00 g of ethyl cellulose (10 cp, 10 wt%, an ethanol solution), 0.50 g of tin (IV) tetra(t-butoxide), and 9.05 g of terpineol were mixed, the resultant mixture was treated with an ultrasonic homogenizer for 2 minutes, and then volatile components were removed with an evaporator to obtain a target paste.

The obtained paste was applied onto the secondary electrode by a screen printing method so that the thickness was 2 µm, dried at 80°C, and then subjected to a UV ozone treatment at 90°C for 20 minutes to form a layer consisting of a porous tin oxide particle film.

Subsequently, a solution of 2,2,3,3-tetrafluoropropanol, containing 1.5% by mass of an electrochromic compound I which has reductive color developability and is represented by a chemical formula (EC1), was applied by a spin coating method, and then subjected to an annealing treatment at 80°C for 10 minutes to be supported (adsorbed) on the above-described porous tin oxide particle film, thereby forming a second electrochromic layer, which was denoted as a "laminate A".

### - Formation of primary electrode -

A polycarbonate resin substrate having the same shape and the same thickness as those of the second support described above was prepared as the first support. An ITO film was formed on the first support by a sputtering method to have a thickness of about 100 nm, thereby forming a primary electrode.

### - Formation of first electrochromic layer -

A solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by Formula (EC2), and 2-butanone at a mass ratio (57:3:140:800) was prepared on the ITO film which was the primary electrode. Then, the prepared solution was applied onto an ITO glass substrate by a spin coating method.

Next, UV curing was carried out under a nitrogen atmosphere through a quartz substrate having a pattern of a Cr layer, and then a patterned first electrochromic layer having a thickness of 1.2 µm, which contained a compound represented by the radically polymerizable compound II, was selectively formed on the secondary electrode.

### - Production of gel electrolyte -

A solution obtained by mixing a polymerizable material (V3877, manufactured by DAIDO CHEMICAL CORPORATION) and an electrolyte (1-ethyl-3-methylimidazolium tetracyanoborate (EMIMTCB)) at a ratio (20:80), and then mixing 0.5% by mass of a photopolymerization initiator (IRGACURE 184, manufactured by Nippon Kayaku Co., Ltd.) with respect to the polymerizable material described above was applied onto a surface of a PET film (NP75C, manufactured by PANAC Co., Ltd.) that had been subjected to a release treatment, a PET film (NP75A, manufactured by PANAC CO., LTD.) that had been subjected to a release treatment was bonded to the above-described PET film, and curing was carried out with ultraviolet rays (UV) to produce a gel electrolyte.

### - Bonding process -

The release film was peeled off from the produced gel electrolyte, and the gel electrolyte was subjected to a bonding treatment on the surface of the first electrochromic layer.

Subsequently, the sealing material (epoxyacrylate resin ("PHOTOREC S-WF17", manufactured by SEKISUI MATERIAL SOLUTIONS CO., LTD.) was applied by a dispenser method to surround the periphery of the side surface of the first electrochromic layer.

Thereafter, the surface of the second electrochromic layer on the second support and the surface of the gel electrolyte were bonded to each other, the sealing material was pressed and spread to cover the side surfaces of the first electrochromic layer and the second electrochromic layer with the sealing material, irradiation was carried out with ultraviolet rays at 3 J/cm² (temporary curing), a heat curing treatment (main curing) was carried out at 100°C for 1 hour, the sealing material was cured to form a sealing part, and an electrochromic sheet was produced.

### <Comparative Example 2-1>

Comparative Example 2-1 was carried out in the same manner as Example 2-1 except that in a case of forming the second electrochromic layer, the annealing treatment after applying the 2,2,3,3-tetrafluoropropanol solution containing 1.5% by mass of the electrochromic compound I having reductive color developability by the spin coating method was changed to vacuum drying at 40°C for 30 minutes.

### (3) Evaluation

The obtained electrochromic sheet was evaluated as follows. The results are shown in Table 3.
- Color development or decoloration performance

The total light transmittance in a case where the electrochromic sheet was allowed to develop color at a voltage of 1.6 V for 20 seconds was measured using an ultraviolet-visible-near infrared spectrophotometer (manufactured by JASCO Corporation, V-670). A low total light transmittance during color development indicates that the color development is deep and sufficient color developability is obtained.

### [Table 3]

**Table 3**

| | Example 2-1 | Comparative Example 2-1 |
|---|---|---|
| β - α | 1.1 | 0.7 |
| Total light transmittance in case of being transparent | 80% | 80% |
| Total light transmittance during color development | 10% | 50% |

### <Experiment 3>

### <Example 3-1>

### (1) Preparation of sealing material

The following sealing materials were prepared.
- Sealing material 1: epoxyacrylate resin ("PHOTOREC S-WF17", manufactured by SEKISUI MATERIAL SOLUTIONS CO., LTD.), not subjected to heating treatment
- Sealing material 2; sealing material obtained by subjecting epoxyacrylate resin ("PHOTOREC S-WF17", manufactured by SEKISUI MATERIAL SOLUTIONS CO., LTD.) to heating treatment at 50°C.
- Sealing material 3: epoxyacrylate resin ("PHOTOREC SUR-137", manufactured by SEKISUI MATERIAL SOLUTIONS CO., LTD.), not subjected to heating treatment

The viscosity of each sealing material was measured according to the following procedure. The results are shown in Table 1.

Using ARES manufactured by TA Instruments, the viscosity (25°C) of the sealing material at a shear rate of each of 0.1/s and 10/s was measured at a gap of 0.053 mm with a combination of a φ25 mm cone plate and a φ25 mm parallel plate.

### (2) Production of electrochromic sheet

Such an electrochromic sheet as shown in Fig. 1 was produced according to the following procedure.

### - Formation of primary electrode -

A polycarbonate resin substrate (POLYCA ACE, deflection temperature under loading: 140°C, manufactured by Sumitomo Bakelite Co., Ltd.) having a thickness of 0.5 mm was prepared as the first support.

On the first support, an ITO film was formed to have a thickness of about 100 nm by a sputtering method, thereby forming a primary electrode.

3 g of titanium oxide (manufactured by ISHIHARA SANGYO KAISHA, LTD., ST-21), 0.2 g of acetylacetone, and 0.3 g of a surfactant (manufactured by FUJIFILM Wako Pure Chemical Corporation, polyoxyethylene octylphenyl ether) were subjected to a beads mill treatment together with 5.5 g of water and 1.0 g of ethanol for 12 hours.

1.2 g of polyethylene glycol (#20,000, manufactured by NOF Corporation) was added to the obtained dispersion liquid to produce a paste.

The obtained paste was applied onto the primary electrode by a screen printing method so that the thickness was 2 µm, dried at 80°C, and then subjected to a UV ozone treatment at 90°C for 20 minutes to form an electron transport layer consisting of a porous titanium oxide particle film.

### - Formation of first electrochromic layer -

Subsequently, a solution of 2,2,3,3-tetrafluoropropanol, containing 1.5% by mass of an electrochromic compound I which has reductive color developability and is represented by a chemical formula (EC1), was applied by a spin coating method, and then subjected to an annealing treatment at 80°C for 10 minutes to be supported (adsorbed) on the above-described porous titanium oxide particle film, thereby forming a first electrochromic layer.

### - Formation of secondary electrode -

A polycarbonate resin substrate having the same shape and the same thickness as those of the first support described above was prepared as the second support. An ITO film was formed on the second support by a sputtering method to have a thickness of about 100 nm, thereby forming a secondary electrode.

### - Formation of second electrochromic layer -

A solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by Formula (EC2), and 2-butanone at a mass ratio (57:3:140:800) was prepared on the ITO film which was the secondary electrode. Then, the prepared solution was applied onto an ITO glass substrate by a spin coating method.

Next, UV curing was carried out under a nitrogen atmosphere through a quartz substrate having a pattern of a Cr layer, and then a patterned second electrochromic layer having a thickness of 1.2 µm, which contained a compound represented by the radically polymerizable compound II, was selectively formed on the secondary electrode.

### - Production of gel electrolyte -

A solution obtained by mixing a polymerizable material (V3877, manufactured by DAIDO CHEMICAL CORPORATION) and an electrolyte (1-ethyl-3-methylimidazolium tetracyanoborate (EMIMTCB)) at a ratio (20:80), and then mixing 0.5% by mass of a photopolymerization initiator (IRGACURE 184, manufactured by Nippon Kayaku Co., Ltd.) with respect to the polymerizable material described above was applied onto a surface of a PET film (NP75C, manufactured by PANAC **Co.,** Ltd.) that had been subjected to a release treatment, a PET film (NP75A, manufactured by PANAC **CO.,** LTD.) that had been subjected to a release treatment was bonded to the above-described PET film, and curing was carried out with ultraviolet rays (UV) to produce a gel electrolyte.

### - Bonding process -

The release film was peeled off from the produced gel electrolyte, and the gel electrolyte was subjected to a bonding treatment on the surface of the first electrochromic layer.

Subsequently, the prepared sealing material 1 was applied by a dispenser method to surround the periphery of the side surface of the first electrochromic layer.

Thereafter, the surface of the second electrochromic layer on the second support and the surface of the gel electrolyte were bonded to each other, the sealing material was pressed and spread to cover the side surfaces of the first electrochromic layer and the second electrochromic layer with the sealing material, irradiation was carried out with ultraviolet rays at 3 J/cm² (temporary curing), a heat curing treatment (main curing) was carried out at 100°C for 1 hour, the sealing material was cured to form a sealing part, and an electrochromic sheet was produced.

### (3) Measurement and evaluation

Next, the obtained electrochromic sheet in Example 3-1 was subjected to the following measurement and evaluation. The results are shown in Table 4.

### - Evaluation of processing durability -

The obtained electrochromic sheet was subjected to 3D bending processing at 146°C using a thermal press molding machine so that the radius of curvature was 131 mm. Then the electrochromic sheet was subjected to cutting processing so that the width of the sealing part on the outer periphery of the electrochromic sheet was 2 mm, and the presence or absence of peeling of the sealing part was evaluated according to the following evaluation criteria.

### [Evaluation criteria]

OK: No peeling occurred
NG: peeling occurred

### <Comparative Examples 3-1 and 3-2>

An electrochromic sheet was produced and subjected to measurement and evaluation in the same manner as in Example 3-1, except that the sealing material used in the electrochromic sheet in Example 3-1 was changed to the material shown in Table 4.

### [Table 4]

**Table 4**

| | Example 3-1 | Comparative Example 3-1 | Comparative Example 3-2 |
|---|---|---|---|
| Sealing material | Sealing material 1 | Sealing material 2 | Sealing material 3 |
| Viscosity (25°C, shear rate: 0.1/s) | 900 Pa's | 1500 Pa's | 600 Pa·s |
| Viscosity (25°C, shear rate: 10/s) | 150 Pa's | 250 Pa·s | 250 Pa·s |
| Evaluation of processing durability | OK | NG | NG |

### <Experiment 4>

### <Example 4-1>

### (1) Preparation of support layer

The following support layer was prepared, and the light transmittance was measured. The results are shown in Table 5.
- First support layer and second support layer: 100 parts by mass of bisphenol A type polycarbonate ("IUPILON E2000F-N" manufactured by Mitsubishi Gas Chemical Company, Inc.) and 0.35 parts by mass of an ultraviolet absorbing agent ("ADEKA STAB LA-31G" manufactured by ADEKA Corporation) were mixed. Then, the resultant mixture was subjected to melt kneading with an extruder and then extrusion molding with a T-die to obtain a sheet having a thickness of 300 µm.

### (2) Production of electrochromic sheet

Such an electrochromic sheet as shown in Fig. 1 was produced according to the following procedure.

### - Formation of primary electrode -

On the first support prepared in (1) described above, an ITO film was formed to have a thickness of about 100 nm by a sputtering method, thereby forming a primary electrode.

3 g of titanium oxide (manufactured by ISHIHARA SANGYO KAISHA, LTD., ST-21), 0.2 g of acetylacetone, and 0.3 g of a surfactant (manufactured by FUJIFILM Wako Pure Chemical Corporation, polyoxyethylene octylphenyl ether) were subjected to a beads mill treatment together with 5.5 g of water and 1.0 g of ethanol for 12 hours.

1.2 g of polyethylene glycol (#20,000, manufactured by NOF Corporation) was added to the obtained dispersion liquid to produce a paste.

The obtained paste was applied onto the primary electrode by a screen printing method so that the thickness was 2 µm, dried at 80°C, and then subjected to a UV ozone treatment at 90°C for 20 minutes to form an electron transport layer consisting of a porous titanium oxide particle film.

### - Formation of first electrochromic layer -

Subsequently, a solution of 2,2,3,3-tetrafluoropropanol, containing 1.5% by mass of an electrochromic compound I which has reductive color developability and is represented by a chemical formula (EC1), was applied by a spin coating method, and then subjected to an annealing treatment at 80°C for 10 minutes to be supported (adsorbed) on the above-described porous titanium oxide particle film, thereby forming a first electrochromic layer.

### - Formation of secondary electrode -

On the second support prepared in (1) described above, an ITO film was formed to have a thickness of about 100 nm by a sputtering method, thereby forming a secondary electrode.

### - Formation of second electrochromic layer -

A solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by Formula (EC2), and 2-butanone at a mass ratio (57:3:140:800) was prepared on the ITO film which was the secondary electrode. Then, the prepared solution was applied onto an ITO glass substrate by a spin coating method.

Next, UV curing was carried out under a nitrogen atmosphere through a quartz substrate having a pattern of a Cr layer, and then a patterned second electrochromic layer having a thickness of 1.2 µm, which contained a compound represented by the radically polymerizable compound II, was selectively formed on the secondary electrode.

### - Production of gel electrolyte -

A solution obtained by mixing a polymerizable material (V3877, manufactured by DAIDO CHEMICAL CORPORATION) and an electrolyte (1-ethyl-3-methylimidazolium tetracyanoborate (EMIMTCB)) at a ratio (20:80), and then mixing 0.5% by mass of a photopolymerization initiator (IRGACURE 184, manufactured by Nippon Kayaku **Co.,** Ltd.) with respect to the polymerizable material described above was applied onto a surface of a PET film (NP75C, manufactured by PANAC **Co.,** Ltd.) that had been subjected to a release treatment, a PET film (NP75A, manufactured by PANAC **CO.,** LTD.) that had been subjected to a release treatment was bonded to the above-described PET film, and curing was carried out with ultraviolet rays (UV) to produce a gel electrolyte.

### - Bonding process -

The release film was peeled off from the produced gel electrolyte, and the gel electrolyte was subjected to a bonding treatment on the surface of the first electrochromic layer.

Subsequently, a sealing material (epoxy resin "CRM-1576AW", manufactured by Sumitomo Bakelite Co., Ltd.) was applied by a dispenser method to surround the periphery of the side surface of the first electrochromic layer.

Thereafter, the surface of the second electrochromic layer on the second support and the surface of the gel electrolyte were bonded to each other, the sealing material was pressed and spread to cover the side surfaces of the first electrochromic layer and the second electrochromic layer with the sealing material, a heat curing treatment was carried out at 100°C for 1 hour, the sealing material was cured to form a sealing part, and an electrochromic sheet was produced.

### (3) Evaluation and measurement

The light resistance of the obtained electrochromic sheet was evaluated.

### · Light resistance

The electrochromic sheet was allowed to develop color at a voltage of 1.6 V for 15 seconds, and the light transmittance was measured. Thereafter, a light resistance test was carried out by carrying out irradiation with a xenon lamp having a light amount of 450 W for 51 hours under an environment of 28°C in accordance with ISO12311:2013. Thereafter, the electrochromic sheet was once turned into a decoloration state, and then allowed to develop color again at a voltage of 1.6 V for 15 seconds. The light transmittance was measured again, and the difference in the transmittance during color development before and after the light resistance test was obtained.

It is indicated that the smaller the difference in the transmittance during color development before and after the light resistance test, the better the light resistance.

It is noted that the light transmittance was measured using an ultraviolet-visible-near infrared spectrophotometer (manufactured by JASCO Corporation, V-670).

### · Measurement of light transmittance

Using an ultraviolet-visible-near infrared spectrophotometer (V-670, manufactured by JASCO Corporation), the transmittance of each support layer was measured, and the light transmittance was calculated. The measurement wavelength was set to 280 nm to 780 nm.

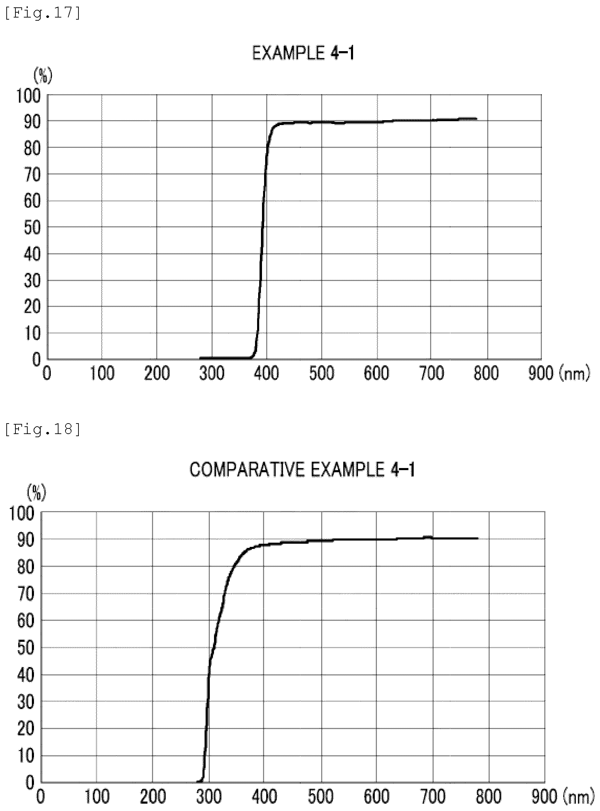

The results are shown in Fig. 17 (Example 4-1) and Fig. 18 (Comparative Example 4-1).

### <Comparative Example 4-1>

Comparative Example 4-1 was carried out in the same manner as Example 4-1, except that the ultraviolet absorbing agent (ADEKA STAB LA-31G, manufactured by ADEKA Corporation) was not used in the first support layer and the second support layer.

### [Table 5]

**Table 5**

| | Example 4-1 | Comparative Example 4-1 |
|---|---|---|
| Transmittance of first support layer and second support layer at wavelength of 380 nm | 4% | 87% |
| Transmittance of first support layer and second support layer at wavelength of 430 nm | 89% | 89% |
| Transmittance of electrochromic sheet during color development before light resistance test | 10% | 10% |
| Transmittance of electrochromic sheet during color development after light resistance test | 13% | 19% |
| Difference in transmittance of electrochromic sheet during color development before and after light resistance test | 3% | 9% |

### <Experiment 5>

### (1) Preparation of sealing material and conductive material

### (Sealing material)

· Liquid sealing material 1; epoxyacrylate resin ("PHOTOREC S-WF17", manufactured by SEKISUI MATERIAL SOLUTIONS CO., LTD.), viscosity (25°C) at shear rate of 10/s: 150 Pa·s
· Solid sealing material 2; double-sided pressure sensitive adhesive film ("LA-50", manufactured by Nitto Denko Corporation), epoxyacrylate resin ("PHOTOREC S-WF17", manufactured by SEKISUI MATERIAL SOLUTIONS CO., LTD.)

### (Conductive material)

· Conductive paste 1; conductive paste ("DOTITE XA-910", manufactured by Fujikura Kasei Co., Ltd.)
· Solid conductive material 2; conductive carbon double-sided tape (manufactured by Nissin EM Co., Ltd.)

### (2) Production of electrochromic sheet

### <Example 5-1>

Such an electrochromic sheet as shown in Fig. 3 was produced according to the following procedure.

### - Formation of primary electrode -

A polycarbonate resin substrate (POLYCA ACE, deflection temperature under loading: 140°C, manufactured by Sumitomo Bakelite Co., Ltd.) having a thickness of 0.5 mm was prepared as the first support.

On the first support, an ITO film was formed to have a thickness of about 100 nm by a sputtering method, thereby forming a primary electrode.

3 g of titanium oxide (manufactured by ISHIHARA SANGYO KAISHA, LTD., ST-21), 0.2 g of acetylacetone, and 0.3 g of a surfactant (manufactured by FUJIFILM Wako Pure Chemical Corporation, polyoxyethylene octylphenyl ether) were subjected to a beads mill treatment together with 5.5 g of water and 1.0 g of ethanol for 12 hours.

1.2 g of polyethylene glycol (#20,000, manufactured by NOF Corporation) was added to the obtained dispersion liquid to produce a paste.

The obtained paste was applied onto the primary electrode by a screen printing method so that the thickness was 2 µm, dried at 80°C, and then subjected to a UV ozone treatment at 90°C for 20 minutes to form an electron transport layer consisting of a porous titanium oxide particle film.

### - Formation of first electrochromic layer -

Subsequently, a solution of 2,2,3,3-tetrafluoropropanol, containing 1.5% by mass of an electrochromic compound I which has reductive color developability and is represented by a chemical formula (EC1), was applied by a spin coating method, and then subjected to an annealing treatment at 80°C for 10 minutes to be supported (adsorbed) on the above-described porous titanium oxide particle film, thereby forming a first electrochromic layer.

### - Formation of secondary electrode -

A polycarbonate resin substrate having the same shape and the same thickness as those of the first support described above was prepared as the second support. An ITO film was formed on the second support by a sputtering method to have a thickness of about 100 nm, thereby forming a secondary electrode.

### - Formation of second electrochromic layer -

A solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by Formula (EC2), and 2-butanone at a mass ratio (57:3:140:800) was prepared on the ITO film which was the secondary electrode. Then, the prepared solution was applied onto an ITO glass substrate by a spin coating method.

Next, UV curing was carried out under a nitrogen atmosphere through a quartz substrate having a pattern of a Cr layer, and then a patterned second electrochromic layer having a thickness of 1.2 µm, which contained a compound represented by the radically polymerizable compound II, was selectively formed on the secondary electrode.

### - Production of gel electrolyte -

A solution obtained by mixing a polymerizable material (V3877, manufactured by DAIDO CHEMICAL CORPORATION) and an electrolyte (1-ethyl-3-methylimidazolium tetracyanoborate (EMIMTCB)) at a ratio (20:80), and then mixing 0.5% by mass of a photopolymerization initiator (IRGACURE 184, manufactured by Nippon Kayaku Co., Ltd.) with respect to the polymerizable material described above was applied onto a surface of a PET film (NP75C, manufactured by PANAC Co., Ltd.) that had been subjected to a release treatment, a PET film (NP75A, manufactured by PANAC CO., LTD.) that had been subjected to a release treatment was bonded to the above-described PET film, and curing was carried out with ultraviolet rays (UV) to produce a gel electrolyte.

The release film was peeled off from the produced gel electrolyte, and the gel electrolyte was subjected to a bonding treatment on the surface of the first electrochromic layer.

### - Coating step for sealing material and conductive paste -

Next, the conductive paste 1 ("DOTITE XA-910", manufactured by Fujikura Kasei Co., Ltd.) was applied onto two places in the vicinity of the outer peripheries of the gel electrolyte and the first electrochromic layer, where the two places were on the primary electrode on which the first electrochromic layer was disposed.

Subsequently, the liquid sealing material 1 ("PHOTOREC S-WF17", manufactured by SEKISUI MATERIAL SOLUTIONS CO., LTD.) was applied by a dispenser method to surround the peripheries of the side surfaces of the gel electrolyte and the first electrochromic layer and to surround the conductive paste 1.

### - Bonding and curing steps -

Thereafter, the surface of the second electrochromic layer on the second support and the surface of the gel electrolyte were bonded to each other, the liquid sealing material 1 and the conductive paste 1 were pressed and spread to closely attach the conductive paste 1 and the liquid sealing material 1 while covering the side surfaces of the first electrochromic layer and the second electrochromic layer with the liquid sealing material **1.** Further, irradiation was carried out with ultraviolet rays at 3 J/cm² (temporary curing), and a heat curing treatment (main curing) was carried out at 100°C for 1 hour to cure both the liquid sealing material 1 and the conductive paste 1, thereby forming a sealing part and each columnar conductive part to produce an electrochromic sheet.

### <Comparative Example 5-1>

An electrochromic sheet was produced in the same manner as in Example 5-1, except that the solid sealing material 2 was used instead of the liquid sealing material 1 in Example 5-1 and a part of the manufacturing step was changed as follows.

Specifically, in the coating step in Example 5-1, instead of applying the liquid sealing material 1, the solid sealing material 2 having a hole opened in advance at a portion that would serve as a columnar conductive part was attached onto the primary electrode on which the first electrochromic layer was disposed. Subsequently, an electrochromic sheet was produced through the bonding and curing steps in the same manner as in Example 5-1, except that the hole of the solid sealing material 2 was filled with the conductive paste 1. It is noted that the solid sealing material 2 was bonded at normal temperature.

### <Comparative Example 5-2>

An electrochromic sheet was produced in the same manner as in Example 5-1, except that the solid sealing material 2 was used instead of the liquid sealing material 1 in Example 5-1, the solid conductive material 2 was used instead of the conductive paste 1, and a part of the manufacturing step was changed as follows.

Specifically, in the coating step in Example 5-1, instead of applying the liquid sealing material 1, the solid sealing material 2 having a hole opened in advance at a portion that would serve as a columnar conductive part was attached onto the primary electrode on which the first electrochromic layer was disposed. Subsequently, the solid conductive material 2 that had been cut into a columnar shape in advance was attached to the hole of the solid sealing material 2 so that the hole thereof could be filled. Thereafter, the surface of the second electrochromic layer on the second support and the surface of the gel electrolyte were aligned with each other, the heat curing treatment was omitted, and the solid sealing material 2 and the solid conductive material 2 were bonded to each other at normal temperature to produce an electrochromic sheet.

### <Comparative Example 5-3>

An electrochromic sheet was produced in the same manner as in Example 5-1, except that the solid conductive material 2 was used instead of the conductive paste 1 in Example 5-1 and a part of the manufacturing step was changed as follows.

Specifically, in the coating step in Example 5-1, the solid conductive material 2 that had been cut in advance in a columnar shape was attached to a portion that would serve as a columnar conductive part, and the liquid sealing material 1 was applied by a dispenser method to surround the side surface peripheries of the gel electrolyte and the first electrochromic layer and to surround the solid conductive material 2. Thereafter, an electrochromic sheet was produced through the bonding and curing steps in the same manner as in Example 5-1. It is noted that the solid conductive material 2 was bonded at normal temperature.

### (3) Evaluation

The adhesiveness of each of the obtained electrochromic sheets was evaluated.

### · Adhesiveness

The adhesiveness was evaluated at the interface between the sealing part of the electrochromic sheet and the columnar conductive part. The results are shown in Table 6.

### [Table 6]

**Table 6**

| | Example 5-1 | Comparative Example 5-1 | Comparative Example 5-2 | Comparative Example 5-3 |
|---|---|---|---|---|
| Sealing part | Liquid sealing material 1 | Solid sealing material 2 | Solid sealing material 2 | Liquid sealing material 1 |
| Columnar conductive part | Conductive paste 1 | Conductive paste 1 | Solid conductive material 2 | Solid conductive material 2 |
| Adhesiveness | There is no gap at the interface between the sealing part and the conductive part, and the sealing part and the conductive part are closely attached to each other (bad: 10 cases out of 0 cases) | Due to the variation in the coating amount of the conductive paste, the conductive paste spreads out, and the electrochromic layer is contaminated in 3 cases out of 10 cases. In other 3 cases out of 10 cases, the filling with conductive paste is insufficient, and conduction cannot be achieved. | Due to the clearance for disposing the conductive film in the hole part of the sealing film, there is a gap at the interface between the sealing film and the conductive film. (bad: 0 cases out of 10 cases) | The conductive carbon double-sided tape is peeled off due to the heating during the curing of the sealing material. (bad: 10 cases out of 10 cases) |

This application claims priority based on Japanese Patent Application No. 2022-174657 filed on October 31, 2022, Japanese Patent Application No. 2022-174669 filed on October 31, 2022, Japanese Patent Application No. 2022-177604 filed on November 4, 2022, Japanese Patent Application No. 2022-174692 filed on October 31, 2022, Japanese Patent Application No. 2022-177608 filed on November 4, 2022, and Japanese Patent Application No. 2022-174841 filed on October 31, 2022, the entire disclosure of which is incorporated herein by reference.

### REFERENCE SIGNS LIST

1 first support layer
2 secondary electrode
3 first electrochromic layer
4 electrolyte layer
5 second electrochromic layer
6 secondary electrode
7 second support layer
8 sealing part
10 electrochromic element71 first auxiliary electrode layer
72 first columnar conductive part
61 second auxiliary electrode layer
62 second columnar conductive part
81 sealing material
222 conductive paste
666 conductive paste
511 metal nanoparticle
521 electrochromic material
10 electrochromic element
100 electrochromic sheet
200 electrochromic sheet
11 first substrate
12 second substrate
13 first electrode
14 second electrode
15 first auxiliary electrode
16 second auxiliary electrode
17 first conductive part
18 second conductive part
20 frame
21 rim part
22 bridge part
23 temple part
24 nose pad part
25 switch
26 battery
30 lens
35 resin layer
37 notch
137 notch
37a to 37k first notch to eleventh notch
40 metal mold
41 upper mold
42 lower mold
42a curved concave surface
43 cavity
44 gate
45 runner
46 resin pool
47 positioning recess part
50 protective film
51 third conductive part
52 fourth conductive part
53 first hole part
54 second hole part
55 sealing part
57 third hole part
58 fourth hole part
60 electrochromic element
63 first electrochromic layer
64 second electrochromic layer
65 electrolyte layer
70 colored region
100 sunglasses
110 element sealing and connecting sheet
120 curved sheet
121 curved convex surface
122 curved concave surface
150 electrochromic sheet
210 connecting sheet laminate
220 curved element laminate
250 element laminate

## Claims

1. An electrochromic sheet comprising:
a support layer;
an electrolyte layer provided over the support layer;
an electrochromic layer provided over at least one surface of the electrolyte layer; and
a sealing part provided to cover at least a side surface of the electrolyte layer,
wherein an amount of deformation measured according to the following procedure i is 0.01 mm to 0.09 mm,
Procedure i: a test piece (having a maximum length of 20 mm or more) in which the electrolyte layer is located at a central part and the sealing part is located at an outer edge is produced by using the electrochromic sheet, the test piece is chucked at both ends by a chucking part, the central part of the test piece is pressed at 30 N for 30 seconds, and a difference in depth between the central part of the test piece before being pressed and the central part of the test piece after being pressed is defined as an amount of deformation (mm).

2. The electrochromic sheet according to Claim 1,
wherein an amount of deformation measured according to the following procedure ii is 0.10 mm or less,
Procedure ii: a test piece (having a maximum length of 20 mm or more) in which the electrolyte layer is located at a central part and the sealing part is located at an outer edge is produced by using the electrochromic sheet, the test piece is chucked at both ends by a chucking part, the central part of the test piece is pressed at 50 N for 30 seconds, and a difference in depth between the central part of the test piece before being pressed and the central part of the test piece after being pressed is defined as an amount of deformation (mm).

3. The electrochromic sheet according to Claim 1,
wherein in the procedure i, the electrochromic sheet has no yield point.

4. The electrochromic sheet according to Claim 2,
wherein in the procedure ii, the electrochromic sheet has no yield point.

5. The electrochromic sheet according to Claim 1 or 2,
wherein the electrolyte layer is a solid or a gel.

6. The electrochromic sheet according to Claim 1 or 2,
wherein the electrolyte layer contains a binder resin.

7. The electrochromic sheet according to Claim 6,
wherein the binder resin includes one or two or more selected from urethane (meth)acrylate, polymethyl (meth)acrylate, polyethyl (meth)acrylate, and poly(ethylene oxide) acrylate.

8. The electrochromic sheet according to Claim 1 or 2,
wherein the electrochromic layer is provided over each of upper and lower surfaces of the electrolyte layer of the electrochromic sheet.

9. The electrochromic sheet according to Claim 1 or 2,
wherein the sealing part is formed of a sealing material including a curable resin.

10. The electrochromic sheet according to Claim 9,
wherein the curable resin has at least one selected from an ultraviolet reactive functional group or a thermal reactive functional group.

11. The electrochromic sheet according to Claim 1 or 2,
wherein the electrochromic sheet further includes an electrode layer between the support layer and the electrochromic layer.

12. An electrochromic device that is obtained by using the electrochromic sheet according to Claim 1 or 2.
